# EUROPÄISCHE PATENTSCHRIFT

(11) **EP 3 965 625 B1**
(45) Veröffentlichungstag und Bekanntmachung des Hinweises auf die Patenterteilung: **16.04.2025**
(21) Anmeldenummer: 20727160.2
(22) Anmeldetag: 07.05.2020
(51) Int. Cl.: A47J 36/24, B65D 75/52, B65D 75/58, B65D 81/32

(54) **TEMPERIERMODUL ZUM TEMPERIEREN VON BABYNAHRUNG, BEUTEL ZUR AUFBEWAHRUNG VON BABYNAHRUNG UND VERFAHREN ZUM TEMPERIEREN EINER BABYNAHRUNG**
TEMPERATURE-CONTROL MODULE FOR CONTROLLING THE TEMPERATURE OF BABY FOOD, POUCH FOR STORING BABY FOOD, AND METHOD FOR CONTROLLING THE TEMPERATURE OF BABY FOOD
MODULE DE MISE EN TEMPÉRATURE PERMETTANT DE METTRE EN TEMPÉRATURE DES ALIMENTS POUR BÉBÉS, SAC DE STOCKAGE DES ALIMENTS POUR BÉBÉS ET PROCÉDÉ DE MISE EN TEMPÉRATURE DES ALIMENTS POUR BÉBÉS

(30) Priorität: 08.05.2019 DE 102019003274
(43) Veröffentlichungstag der Anmeldung: 16.03.2022
(73) Patentinhaber: SMIICS GmbH, 37083 Göttingen (DE)
(72) Erfinder: SCHLACK, Stefan, 37083 Göttingen (DE)
(74) Vertreter: Müller-Boré & Partner Patentanwälte PartG mbB
(86) Internationale Anmeldenummer: PCT/EP2020/062672
(87) Internationale Veröffentlichungsnummer: WO 2020/225349

(56) Entgegenhaltungen:
- WO-A1-2016/030856
- DE-U1- 20 210 078
- DE-U1- 202012 000 728
- FR-A1- 2 889 802
- US-A1- 2004 045 841
- US-A1- 2006 011 497
- US-A1- 2015 164 270
- US-B1- 6 612 428

## Beschreibung

Die vorliegende Erfindung betrifft ein Set mit einem Temperiermodul zum Temperieren von Babynahrung und einem Beutel zur Aufbewahrung der Babynahrung, eine Verwendung eines Beutels für eine Aufbewahrung von Babynahrung und ein Verfahren zum Temperieren von Babynahrung.

Um auch unterwegs Babynahrung zur Verfügung zu haben, müssen Eltern üblicherweise eine Vielzahl von Utensilien mitführen, um im Bedarfsfall eine Babynahrung für das Baby herstellen zu können. Üblicherweise wird eine Thermoskanne mit abgekochtem Wasser mitgenommen, wobei das Wasser vor Gebrauch auf eine angenehme Trinktemperatur abgekühlt sein muss. In manchen Fällen ist das abgekochte Wasser schon zu weit abgekühlt, so dass es zu kalt für das Baby ist. Alternativ können Flaschen mit speziellem Babywasser, vorgefertigte Milch oder Muttermilch mitgenommen werden, die jedoch nicht auf eine Trinktemperatur erhitzt sind. In allen Fällen ist es schwer bzw. besteht im Bedarfsfall nicht die geeignete Trinktemperatur für das Baby.

Weiterhin stellen Thermoskannen und Plastikbehälter, in denen das Pulver (Babynahrungskonzentrat) für die Babynahrung mitgeführt wird, offene Systeme dar. Es besteht somit eine Gefahr einer Verkeimung. Mit anderen Worten kann das Wasser als auch das Pulver für die Babynahrung nur begrenzt in diesen Systemen gelagert werden.

Zudem müssen die Eltern Babyflaschen mit Schnuller-Aufsätzen mitführen, um das Baby mit der Babynahrung füttern zu können. Die Babyflaschen und Schnuller-Aufsätze müssen jedoch nach dem Gebrauch gereinigt und sterilisiert werden. Zum Sterilisieren wird insbesondere ein Herd benötigt, um beispielsweise die Flaschen auszukochen. Ein Herd ist jedoch unterwegs üblicherweise schwer verfügbar. Zudem ist das Reinigen und Sterilisieren zeitaufwendig.

Dies alles bedeutet für Ausflüge und insbesondere für längere Reisen eine Vielzahl von Utensilien, die Eltern mit sich führen müssen und ein Herstellungsverfahren der Babynahrung, bei welcher regelmäßig die optimale Trinktemperatur verfehlt wird.

Die Druckschrift DE 20 2012 000728 U1 offenbart beispielsweise eine Vorrichtung zur Erwärmung von Nahrung, aufweisend eine Erwärmungseinrichtung und mindestens einen Behälter, wobei die Erwärmungseinrichtung mit mindestens einem Sichtfenster ausgebildet ist, und der Behälter eine Temperaturanzeige aufweist, welche durch das Sichtfenster der Erwärmungseinrichtung einsehbar ist.

Weiterhin offenbart die Druckschrift US 6,612,428 B1 einen Dispenser aufweisend einem Kunststoffbeutel mit zwei Kammern, von denen eine Flüssigkeit und die andere Feststoff enthält, und einen Verbinder mit einem Halselement, das den Beutel hält. Der Beutel hat eine Siegelnaht, die aufreißbar ist und die Kammern trennt. Der Verbinder kann eine Vielzahl von Kappen zum Abgeben der gemischten Flüssigkeit und des Feststoffs aufweisen. Insbesondere kann der Dispenser auf eine wegwerfbare/wiederverwertbare Babyflasche gerichtet sein, wobei der Beutel hier Wasser in einer Kammer und Babynahrung in der anderen Kammer enthält.

Es ist somit die Aufgabe der vorliegenden Erfindung, ein einfaches transportables System zur Bereitstellung von Babynahrung bereitstellen, das es ermöglicht, Babynahrung unterwegs schnell und optimal temperiert herzustellen.

Dieses Problem wird durch die unabhängigen Ansprüche gelöst. Bevorzugte Ausführungsformen sind Gegenstand der abhängigen Ansprüche.

Gemäß einem ersten Aspekt wird das Problem durch ein Set umfassend ein Temperiermodul zum Temperieren von Babynahrung, insbesondere von Babymilch oder Babybrei, und einen Beutel zur Aufbewahrung der Babynahrung, welcher in das Temperiermodul einsetzbar ist gelöst;
wobei das Temperiermodul zumindest ein Heizelement umfasst, welches dazu ausgelegt ist, eine Innenwand des Temperiermoduls zu erwärmen, um die in dem Beutel enthaltene Babynahrung zu temperieren,
wobei das Temperiermodul Spannvorrichtungen umfasst;
wobei der Beutel zumindest eine Kammer zur Aufnahme der Babynahrung umfasst;
wobei die Kammer eine Öffnung zum Befüllen der Kammer aufweist;
wobei an der Öffnung ein Anschlusselement angeordnet ist;
wobei an einer Außenseite des Anschlusselements ein erstes Spannmittel ausgebildet ist, wobei das erste Spannmittel einen zumindest bereichsweise umlaufenden Spannvorsprung umfasst;
wobei an einem Ende des Beutels, welches dem Ende entgegengesetzt ist, an dem das Anschlusselement angeordnet ist, ein zweites Spannmittel vorgesehen ist,
wobei das erste und zweite Spannmittel des Beutels dazu ausgelegt sind, mit den Spannvorrichtungen des Temperiermoduls verbindbar zu sein, um den in das Temperiermodul eingesetzten Beutel in einem Zustand zu halten, in der ein flächiges Anlegen des Beutels an der Innenwand des Temperiermoduls ermöglicht ist.

Der "Beutel" stellt ein flexibles Behältnis dar, welches vorzugsweise aus Kunststoff, wie z.B. Polyethylen, hergestellt ist. Besonders bevorzugt ist eine Verbundfolie aus Polyethylen und Polyamid. Insbesondere ist der Beutel zur einmaligen Benutzung ausgelegt und kann nach dessen Verwendung entsorgt werden.

Der Beutel ist dazu geeignet, Babynahrung aufzunehmen, welche in dem Temperiermodul temperiert werden kann. Als "Babynahrung" wird dabei Babymilch oder Babybrei verstanden. Babymilch kann dabei Muttermilch sein oder eine Babymilch, welche aus einem Pulver (Babynahrungskonzentrat) und Wasser angemischt wird. Durch ein Einsetzen des Beutels mit der Babynahrung in das Temperiermodul kann die Babynahrung auf Trink- bzw. Esstemperatur temperiert werden. Insbesondere kann durch das Temperiermodul auch tiefgefrorene Babynahrung, wie z.B. tiefgefrorene Muttermilch, erhitzt werden.

Das Temperiermodul stellt also eine Aufnahme dar, in welche ein Beutel mit Babynahrung aufgenommen werden kann, um die Babynahrung im Bedarfsfall zu erhitzen.

Da sich das Temperiermodul zum Erhitzen von Beuteln eignet, kann der Benutzer vorportionierte Babynahrungseinheiten in Beuteln mitführen, die im Bedarfsfall temperiert werden. Der Beutel kann im Anschluss entsorgt werden. Ein Mitnehmen von Babyflaschen und das anschließende Reinigen und Sterilisieren der Babyflaschen entfallen.

Vorzugsweise ist das Heizelement als Heizmatte ausgebildet. Das Heizelement kann die Innenwand des Temperiermoduls dabei zumindest teilweise oder auch vollständig überlappen. Durch das Heizelement wird die Innenwand des Temperiermoduls erwärmt, wobei in der Folge Wärme von der Innenwand des Temperiermoduls an den Beutel abgegeben wird, der in das Temperiermodul eingesetzt ist.

Insbesondere ermöglicht das Temperiermodul ein schnelles Temperieren der Babynahrung, da das Temperiermodul durch die Spannvorrichtungen den Beutel derart in dem Temperiermodul hält, dass der Beutel flächig an der erhitzten Innenwand des Temperiermoduls anliegt. Ein Zusammenfallen des Beutels und Knickstellen in dem Beutel werden vermieden. Da der Beutel flächig an der Innenwand anliegt, befindet sich keine isolierende Luft zwischen dem Beutel und der erhitzten Innenwand, die ein schnelles Erhitzen verhindern würde.

Das Temperiermodul kann unterwegs vorzugsweise mittels eines Akkus betrieben werden oder über eine Steckdose und Kabel mit Energie versorgt werden.

Vorzugsweise umfasst das Temperiermodul ein rotationssymmetrisches Temperiermodul-Gehäuse mit einer Temperiermodul-Bodenfläche und einer Temperiermodul-Einsetzöffnung, über die der Beutel in das Temperiermodul-Gehäuse einsetzbar ist.

Es ist bevorzugt, dass in der Innenwand des Temperiermodul-Gehäuses zumindest eine Spannvertiefung als Spannvorrichtung ausgebildet ist, welche sich in einer Längsrichtung erstreckt.

Die "Längsrichtung" erstreckt sich dabei parallel zu der Rotationsachse des Temperiermodul-Gehäuses. Die Spannvertiefung ist dabei so ausgelegt, dass ein entsprechendes Spannmittel, welches an dem Beutel angeordnet ist, bei Einsetzen über die Temperiermodul-Einsetzöffnung in die Spannvertiefung eingeschoben werden kann.

Das Temperiermodul kann lediglich eine Spannvertiefung aufweisen. Es ist jedoch auch möglich, dass mehrere Spannvertiefungen in dem Temperiermodul ausgebildet sind.

Durch die Spannvertiefung und ein in die Spannvertiefung eingreifendes Spannmittel eines Beutels kann der Beutel ohne Knickstellen in einer aufrechten Position in dem Temperiermodul gehalten werden. Insbesondere liegt der Beutel flächig an der Innenwand des Temperiermoduls an, so dass ein schnelles Erhitzen der Babynahrung möglich ist.

Alternativ kann ein umlaufender Rand an der Temperiermodul-Einsetzöffnung oder eine Spannauflagefläche benachbart zu der Temperiermodul-Einsetzöffnung eine erste Spannvorrichtung bilden.

Der umlaufende Rand begrenzt die Temperiermodul-Einsetzöffnung. Dieser Rand kann die erste Spannvorrichtung des Temperiermoduls bilden. Alternativ kann jedoch auch nach innen versetzt eine Spannauflagefläche ausgebildet sein, die dann die erste Spannvorrichtung bildet. Als "benachbart" zu der Temperiermodul-Einsetzöffnung ist dabei ein Abstand zu der Temperiermodul-Einsetzöffnung von vorzugsweise bis zu 3 cm zu verstehen. Um die Spannauflagefläche auszubilden, weitet sich der Durchmesser des Innenraums der Temperiermoduls auf. An der Stelle, an der sich der Durchmesser des Innenraums des Temperiermoduls aufweitet, ist eine Spannauflagefläche ausgebildet, welche sich vorzugsweise senkrecht zu der Längsrichtung erstreckt.

Wird der Beutel in das Temperiermodul eingesetzt, kann ein entsprechendes Spannmittel an dem Beutel auf dem umlaufenden Rand oder der Spannauflagefläche aufliegen, so dass ein Hineinrutschen des Beutels in das Temperiermodul verhindert wird.

Ergänzend kann in oder an der Temperiermodul-Bodenfläche zumindest ein Magnet als zweite Spannvorrichtung angeordnet sein.

Der zumindest eine Magnet ist dabei ausgelegt, mit einem Magneten in oder an dem Beutel verbunden zu werden.

Somit befinden sich an entgegengesetzten Enden des Innenraums des Temperiermoduls in Bezug auf die Längsrichtung Spannvorrichtungen, die es ermöglichen, den Beutel derart in dem Temperiermodul zu halten, dass Knickstellen vermieden werden und der Beutel flächig an der Innenwand gehalten werden kann. Hierdurch kann die Babynahrung schnell in dem Temperiermodul temperiert werden.

Alternativ zu dem Magneten kann in der Temperiermodul-Bodenfläche eine Spannöffnung als zweite Spannvorrichtung ausgebildet sein, welche dazu ausgelegt ist, eine Spannlasche, welche an dem eingesetzten Beutel befestigt ist, aus der Temperiervorrichtung herauszuführen.

Die Spannlasche tritt im eingesetzten Zustand über die Spannöffnung aus dem Temperiermodul zumindest teilweise heraus und kann manuell durch den Benutzer noch weiter herausgezogen werden. Durch das Herausziehen der Spannlasche kann der Beutel in Ergänzung zu dem Aufliegen des Beutels auf der ersten Spannvorrichtung am oberen Ende des Temperiermoduls derart in dem Temperiermodul gehalten werden, dass der Beutel flächig an der Innenwand gehalten werden kann. Hierdurch kann die Babynahrung schnell in dem Temperiermodul temperiert werden.

Alternativ zu einem Magneten oder einer Spannöffnung kann in der Innenwand des Temperiermodul-Gehäuses benachbart zu der Temperiermodul-Bodenfläche eine umlaufende Spannvertiefung als zweite Spannvorrichtung ausgebildet sein.

Als "benachbart" zu der Temperiermodul-Bodenfläche wird hier ebenfalls ein Abstand zu der Temperiermodul-Bodenfläche bezüglich der Längsrichtung von vorzugsweise maximal 3 cm verstanden. Die umlaufende Spannvertiefung wird dabei durch einen Bereich in der Innenwand des Temperiermoduls gebildet, in dem sich der Durchmesser des Innenraums des Temperiermoduls aufweitet. Die umlaufende Spannvertiefung wird dabei durch eine Fläche gebildet, an der sich der Durchmesser des Innenraums des Temperiermoduls aufweitet. Vorzugsweise erstreckt sich die Fläche senkrecht zur Längsrichtung. Insbesondere ist es bevorzugt, dass sich der Innenraum des Temperiermoduls zwischen der umlaufenden Spannvertiefung und der Temperiermodul-Bodenfläche aufweitet.

In die umlaufende Spannvertiefung kann ein entsprechendes Spannmittel an dem eingesetzten Beutel eingreifen. Hierdurch kann in Ergänzung zu dem Aufliegen des Beutels auf der ersten Spannvorrichtung am oberen Ende des Temperiermoduls der Beutel derart in dem Temperiermodul gehalten werden, dass der Beutel flächig an der Innenwand gehalten werden kann. Somit kann die Babynahrung schnell in dem Temperiermodul temperiert werden.

Vorzugsweise ist das Temperiermodul-Gehäuse aufklappbar.

Dies ist besonders dann bevorzugt, wenn die zweite Spannvorrichtung als umlaufende Spannvertiefung ausgebildet ist. Vorzugsweist ist das Temperiermodul entlang der Längsrichtung aufklappbar, um ein Einsetzen des Spannmittels in die umlaufende Spannvertiefung als zweite Spannvorrichtung zu gewährleisten.

Gemäß einem weiteren Aspekt der vorliegenden Erfindung wird das zugrunde liegende Problem durch eine Verwendung eines Beutels für eine Aufbewahrung von Babynahrung, insbesondere von Babymilch oder Babybrei, in Zusammenhang mit einem Temperiermodul zum Temperieren der Babynahrung gelöst,
wobei das Temperiermodul zumindest ein Heizelement umfasst, welches dazu ausgelegt ist, eine Innenwand des Temperiermoduls zu erwärmen, um in dem Beutel enthaltene Babynahrung zu temperieren;
wobei der Beutel zumindest eine Kammer zur Aufnahme der Babynahrung umfasst;
wobei die Kammer eine Öffnung zum Befüllen der Kammer aufweist;
wobei an der Öffnung ein Anschlusselement angeordnet ist;
wobei an einer Außenseite des Anschlusselements ein erstes Spannmittel ausgebildet ist, wobei das erste Spannmittel einen zumindest bereichsweise umlaufenden Spannvorsprung umfasst;
wobei an einem Ende des Beutels, welches dem Ende entgegengesetzt ist, an dem das Anschlusselement angeordnet ist, ein zweites Spannmittel vorgesehen ist,
wobei das erste und zweite Spannmittel ausgelegt sind, mit Spannvorrichtungen des Temperiermoduls verbunden zu sein, wenn der Beutel in das Temperiermodul eingesetzt ist, um den Beutel in einem Zustand zu halten, in der ein flächiges Anlegen des Beutels an eine Innenwand des Temperiermoduls ermöglicht ist.

Definitionen zu einem Beutel, welche bereits im Hinblick auf das Temperiermodul getätigt wurden, gelten auch hier entsprechend.

An einem ersten Ende des Beutels benachbart zu der Öffnung des Beutels befindet sich das Anschlusselement, welches an der Öffnung des Beutels mit dem flexiblen Beutel verbunden ist. Im Gegensatz zu dem Beutel ist das Anschlusselement aus einem starren Material gefertigt, vorzugsweise aus einem starren Kunststoff.

An einem zweiten Ende des Beutels, welches entgegengesetzt zu dem ersten Ende des Beutels angeordnet ist, befindest sich ein zweites Spannmittel. Eine Richtung, welches sich zwischen dem ersten und zweiten Ende des Beutels erstreckt, wird als "Beutel-Längsrichtung" bezeichnet.

An einer Außenseite des Anschlusselements ist zumindest bereichsweise ein umlaufender Spannvorsprung als erstes Spannmittel ausgebildet. Als Außenseite wird dabei vorzugsweise die Seite des Anschlusselements verstanden, die sich entlang der Beutel-Längsrichtung erstreckt. Durch den zumindest bereichsweise umlaufenden Spannvorsprung weitet sich das Anschlusselement in dem entsprechenden Bereich auf.

Die Spannmittel des Beutels sind dabei ausgelegt, den Beutel so in einem Temperiermodul halten zu können, dass der Beutel flächig an einer Innenwand des Temperiermoduls anliegen kann. Es wird vermieden, dass der Beutel zusammensackt und sich Knickstellen in dem Beutel bilden. Insbesondere wird isolierende Luft zwischen dem Beutel und der Innenwand des Temperiermoduls vermieden, so dass ein schnelles Erhitzen der Babynahrung erreicht werden kann.

Gemäß einer bevorzugten Ausführungsform weist der Beutel eine Kammer auf.

Beutel mit einer Kammer eignen sich dabei besonders zum Lagern und Transportieren von bereits fertig angemischter Babymilch oder Babybrei oder Muttermilch.

Vorzugsweise umfasst das zweite Spannmittel hier eine Spannplatte, welche an einer Bodenfläche des Beutels befestigt ist und in oder an der zumindest ein Magnet angeordnet ist.

Als "Bodenfläche" des Beutels wird dabei die Fläche des Beutels bezeichnet, welche sich an dem zweiten Ende des Beutels befindet. Im eingesetzten Zustand des Beutels in ein Temperiermodul liegt diese Bodenfläche der Temperiermodul-Bodenfläche gegenüber. Der zumindest eine Magnet in oder an der Spannplatte des Beutels ist dazu ausgelegt, mit einem entsprechenden Magneten in oder an der Temperiermodul-Bodenfläche verbunden zu werden, so dass das zweite Ende des Beutels an der Temperiermodul-Bodenfläche sicher gehalten wird.

Das erste Spannmittel des Beutels ist dazu ausgelegt, gleichzeitig auf einer Spannvorrichtung an dem Temperiermodul aufzuliegen, so dass das erste Ende des Beutels nicht in das Temperiermodul hineinrutschen kann.

Durch das erste und zweite Spannmittel kann der Beutel somit so in dem Temperiermodul gehalten werden, dass der Beutel flächig an einer erhitzten Innenwand des Temperiermoduls gehalten und die Babynahrung schnell erhitzt werden kann.

Alternativ umfasst das zweite Spannmittel eine Spannlasche, welche an einer Bodenfläche des Beutels befestigt ist und sich in einer Beutel-Längsrichtung erstreckt.

Die Spannlasche ist dazu ausgelegt, aus einer Spannöffnung in einem Temperiermodul herausgeführt zu werden, um zu gewährleisten, dass die Bodenfläche des Beutels sicher in Richtung zu der Temperiermodul-Bodenfläche gezogen wird.

Das erste Spannmittel des Beutels ist hier ebenfalls dazu ausgelegt, gleichzeitig auf einer Spannvorrichtung an dem Temperiermodul aufzuliegen, so dass das erste Ende des Beutels nicht in das Temperiermodul hineinrutschen kann.

Durch eine derartige Konfiguration des ersten und zweiten Spannmittels kann damit auch hier der Beutel so in dem Temperiermodul gehalten werden, dass der Beutel flächig an einer erhitzten Innenwand des Temperiermoduls gehalten und die Babynahrung schnell erhitzt werden kann.

Weiterhin kann der Spannvorsprung an dem Anschlusselement ein erster Spannvorsprung sein, wobei die Öffnung, an der das Anschlusselement ausgebildet ist, eine erste Öffnung ist;
wobei der Beutel eine zweite Öffnung umfasst, welche an einer Seite des Beutels ausgebildet ist, welche der Seite, an der die erste Öffnung ausgebildet ist, entgegengesetzt ist;
wobei an der zweiten Öffnung ein Spanndeckel ausgebildet ist, welcher die zweite Öffnung verschließt und an dessen Außenseite ein zumindest bereichsweise umlaufender zweiter Spannvorsprung ausgebildet ist; und
wobei der erste und zweite Spannvorsprung dazu ausgelegt sind, mit den Spannvorrichtungen des Temperiermoduls in Eingriff zu stehen, wenn der Beutel in das Temperiermodul eingesetzt ist, so dass der Beutel flächig an der Innenwand des Temperiermoduls anliegt.

An dem zweiten Ende des Beutels befindet sich eine zweite Öffnung, welche durch einen Spanndeckel verschlossen ist. Als Außenseite des Spanndeckels wird vorzugsweise die Seite des Spanndeckels definiert, die sich entlang der Beutel-Längsrichtung erstreckt. An dieser Außenseite befindet sich ein zumindest bereichsweise umlaufender zweiter Spannvorsprung. Die Größe und Position des zweiten Spannvorsprungs kann frei gewählt werden oder entlang der Beutel-Längsachse mit einem ersten Spannvorsprung ausgerichtet sein.

Der Spanndeckel ist, ähnlich zu dem Anschlusselement, als ein starres Element ausgebildet.

Der erste und zweite Spannvorsprung sind dazu ausgelegt, jeweils mit einer entsprechenden Spannvorrichtung in dem Temperiermodul in Eingriff zu stehen, so der Beutel so in dem Temperiermodul gehalten werden, dass der Beutel flächig an einer erhitzten Innenwand des Temperiermoduls gehalten und die Babynahrung schnell erhitzt werden kann.

Alternativ kann der Spannvorsprung an dem Anschlusselement ein erster Spannvorsprung sein und die Öffnung, an der das Anschlusselement ausgebildet ist, kann eine erste Öffnung sein;
wobei der Beutel eine zweite Öffnung umfasst, welche an einer Seite des Beutels ausgebildet ist, welche der Seite, an der die erste Öffnung ausgebildet ist, entgegengesetzt ist;
wobei an der zweiten Öffnung ein Spanndeckel ausgebildet ist, welcher die zweite Öffnung verschließt und an dessen Außenseite ein zumindest bereichsweise umlaufender zweiter Spannvorsprung ausgebildet ist; und
wobei der zweite Spannvorsprung zumindest eine Spannstrebe umfasst, welche sich in einer Beutel-Längsrichtung erstreckt und mit dem ersten Spannvorsprung verbunden ist.

Die obige Beschreibung zu dem Spanndeckel und dem ersten und zweiten Spannvorsprung gilt auch hier entsprechend.

Ergänzend weist hier jedoch der zweite Spannvorsprung zumindest eine Spannstrebe auf, welche sich in der Beutel-Längsrichtung erstreckt und mit dem ersten Spannvorsprung verbunden ist. Durch die stützende Kraft der Spannstrebe, kann das Anschlusselement und der Spanndeckel bezüglich der Beutel-Längsrichtung stabil voneinander beabstandet gehalten werden. Die Länge der Spannstrebe ist dabei vorzugsweise so zu wählen, dass der Beutel keine Knickstellen aufweist.

Insbesondere kann die Spannstrebe dazu ausgelegt sein, in eine Spannvorrichtung in einem Temperiermodul entlang einer Längsrichtung eingeschoben zu werden. Hierdurch kann weiterhin gewährleistet werden, dass der Beutel flächig an der Innenwand des Temperiermoduls anliegt, um so schnell die Babynahrung in dem Beutel zu temperieren.

Vorzugsweise ist das Anschlusselement dazu ausgelegt, mit einer Milchpumpe und/oder einem Dispenser zum Befüllen der Kammer verbunden zu werden.

Weiterhin ist es bevorzugt, dass der Beutel eine erste Kammer und eine zweite Kammer umfasst, welche durch einen Trennbereich voneinander getrennt sind;
wobei die erste Kammer zur Aufnahme eines Babynahrungskonzentrats ausgelegt ist;
wobei die zweite Kammer zur Aufnahme eines Fluids ausgelegt ist;
wobei die erste und zweite Kammer entlang einer Beutel-Längsrichtung des Beutels angeordnet sind;
wobei der Trennbereich durch Krafteinwirkung auf den Beutel zumindest teilweise öffenbar ist, um die in der ersten und zweiten Kammer enthaltenen Komponenten zu einer Babynahrung mischen zu können;
wobei das Anschlusselement mit dem ersten Spannvorsprung ein erstes Anschlusselement ist und wobei die Öffnung, an der das erste Anschlusselement angeordnet ist, eine erste Öffnung ist;
wobei an einem Ende, welches entgegengesetzt zu dem Ende ist, an dem das erste Anschlusselement ausgebildet ist, eine zweite Öffnung ausgebildet ist; und
wobei an der zweiten Öffnung ein zweites Anschlusselement ausgebildet ist.

Der Beutel enthält zwei Kammern, die durch einen Trennbereich voneinander getrennt sind, so dass vor Gebrauch das Babynahrungskonzentrat und das Fluid nicht miteinander in Kontakt treten und vermischt werden können.

Die Kammern sind insbesondere entlang der Beutel-Längsrichtung angeordnet, wobei die entgegengesetzten Enden des Beutels offen sind. Eine erste Öffnung befindet sich hierbei benachbart zu der ersten Kammer und eine zweite Öffnung befindet sich benachbart zu der zweiten Kammer. Über die Öffnungen können die Kammern (z.B. durch die Eltern) mit Inhalt (z.B. dem Fluid und dem Babynahrungskonzentrat) vorab (z.B. zu Hause) befüllt werden. Vorzugsweise können die Öffnungen anschließend mit Hilfe eines ersten und zweiten Verschlusses jeweils verschlossen werden. Hierdurch ist die Babynahrung bereits vorportioniert und kann im Bedarfsfall vermischt werden. Da die einzelnen Komponenten der Babynahrung separat gelagert werden, weist die Babynahrung bzw. der Inhalt des Beutels eine längere Haltbarkeit auf.

Zum Vermischen wird durch den Benutzer der Trennbereich durch Krafteinwirkung auf den Beutel der Trennbereich zumindest teilweise aufgebrochen bzw. geöffnet, so dass sich die einzelnen Komponenten bzw. der bzw. die Inhalt(e) des Beutels vermischen können und die Babynahrung hergestellt werden kann. Durch Schütteln des Beutels kann eine optimale Mischung erzeugt werden.

Das zweite Anschlusselement ist vorzugsweise ebenfalls als starres Element ausgebildet.

Bevorzugterweise umfasst das zweite Spannmittel zumindest einen Magneten, welcher in oder an einem Verschluss angeordnet ist, welcher mit dem zweiten Anschlusselement verbindbar ist.

In einem Beutel mit zwei Kammern befindet sich der zumindest eine Magnet in oder an einem Verschluss, welcher die zweite Öffnung verschließt. Der zumindest eine Magnet in oder an diesem Verschluss ist dabei dazu ausgelegt, mit einem entsprechenden Magneten in oder an der Temperiermodul-Bodenfläche verbunden zu werden, so dass das zweite Ende des Beutels an der Temperiermodul-Bodenfläche sicher gehalten wird.

Das erste Spannmittel des Beutels ist dazu ausgelegt, gleichzeitig auf einer Spannvorrichtung an dem Temperiermodul aufzuliegen, so dass das erste Ende des Beutels nicht in das Temperiermodul hineinrutschen kann.

Durch das erste und zweite Spannmittel kann der Beutel somit so in dem Temperiermodul gehalten werden, dass der Beutel flächig an einer erhitzten Innenwand des Temperiermoduls gehalten und die Babynahrung schnell erhitzt werden kann.

Alternativ kann das zweite Spannmittel eine Spannlasche umfassen, welche an einem Verschluss befestigt ist, welcher mit dem zweiten Anschlusselement verbindbar ist, wobei sich die Spannlasche in der Beutel-Längsrichtung erstreckt.

Die Spannlasche ist dazu ausgelegt, aus einer Spannöffnung in einem Temperiermodul herausgeführt zu werden, um zu gewährleisten, dass die Bodenfläche des Beutels sicher in Richtung zu der Temperiermodul-Bodenfläche gezogen wird.

Das erste Spannmittel des Beutels ist hier ebenfalls dazu ausgelegt, gleichzeitig auf einer Spannvorrichtung an dem Temperiermodul aufzuliegen, so dass das erste Ende des Beutels nicht in das Temperiermodul hineinrutschen kann.

Durch eine derartige Konfiguration des ersten und zweiten Spannmittels kann damit auch hier der Beutel so in dem Temperiermodul gehalten werden, dass der Beutel flächig an einer erhitzten Innenwand des Temperiermoduls gehalten und die Babynahrung schnell erhitzt werden kann.

Weiterhin kann alternativ an der Außenseite des zweiten Anschlusselements ein zumindest bereichsweise umlaufender zweiter Spannvorsprung ausgebildet sein; und
wobei der ersten und zweite Spannvorsprung dazu ausgelegt sind, mit den Spannvorrichtungen des Temperiermoduls in Eingriff zu stehen, wenn der Beutel in das Temperiermodul eingesetzt ist, so dass der Beutel flächig an der Innenwand des Temperiermoduls anliegt.

An dem zweiten Ende des Beutels befindet sich eine zweite Öffnung, an welchem ein zweites Anschlusselement angeordnet ist. Als Außenseite des zweiten Anschlusselements wird vorzugsweise die Seite des zweiten Anschlusselements definiert, die sich entlang der Beutel-Längsrichtung erstreckt. An dieser Außenseite befindet sich ein zumindest bereichsweise umlaufender zweiter Spannvorsprung. Die Größe und Position des zweiten Spannvorsprungs kann frei gewählt werden oder entlang der Beutel-Längsachse mit einem ersten Spannvorsprung ausgerichtet sein.

Der erste und zweite Spannvorsprung sind dazu ausgelegt, jeweils mit einer entsprechenden Spannvorrichtung in dem Temperiermodul in Eingriff zu stehen, so der Beutel so in dem Temperiermodul gehalten werden, dass der Beutel flächig an einer erhitzten Innenwand des Temperiermoduls gehalten und die Babynahrung schnell erhitzt werden kann.

Weiterhin kann alternativ an der Außenseite des zweiten Anschlusselements ein zumindest bereichsweise umlaufender zweiter Spannvorsprung ausgebildet sein; und
wobei der zweite Spannvorsprung zumindest eine Spannstrebe umfasst, welche sich in der Beutel-Längsrichtung erstreckt und mit dem ersten Spannvorsprung verbunden ist.

Die Definition der "Außenseite" des zweiten Anschlusselements ist identisch zu der bereits oben definierten Außenseite. Außerdem gilt die obige Beschreibung zu dem ersten und zweiten Spannvorsprung auch hier entsprechend.

Ergänzend weist hier jedoch der zweite Spannvorsprung zumindest eine Spannstrebe auf, welche sich in der Beutel-Längsrichtung erstreckt und mit dem ersten Spannvorsprung verbunden ist. Durch die stützende Kraft der Spannstrebe, kann das Anschlusselement und der Spanndeckel bezüglich der Beutel-Längsrichtung stabil voneinander beabstandet gehalten werden. Die Länge der Spannstrebe ist dabei vorzugsweise so zu wählen, dass der Beutel keine Knickstellen aufweist.

Insbesondere kann die Spannstrebe dazu ausgelegt sein, in eine Spannvorrichtung in einem Temperiermodul entlang einer Längsrichtung eingeschoben zu werden. Hierdurch kann weiterhin gewährleistet werden, dass der Beutel flächig an der Innenwand des Temperiermoduls anliegt, um so schnell die Babynahrung in dem Beutel zu temperieren.

Vorzugsweise sind das erste und zweite Anschlusselement dazu ausgelegt, mit einem Dispenser verbindbar zu sein, so dass die entsprechende Kammer durch den Dispenser befüllbar ist.

Weiterhin ist es bevorzugt, dass das Anschlusselement mit einem Baby-Sauger verbindbar ist.

Hierdurch kann die temperierte Babynahrung direkt aus dem Beutel durch das Baby konsumiert werden.

Weist der Beutel zwei Kammern auf, kann der Baby-Sauger mit zumindest einem der Anschlusselemente verbunden werden.

Gemäß einem weiteren Aspekt der vorliegenden Erfindung wird die zugrunde liegende Aufgabe durch ein Verfahren zum Temperieren einer Babynahrung, insbesondere von Babymilch oder Babybrei, gelöst, welches umfasst:
Bereitstellen eines Sets nach einem der oben beschriebenen Ausführungsformen, wobei der Beutel mit Babynahrung befüllt ist;
Einsetzen des Beutels in das Temperiermodul, derart dass durch die Spannmittel des Beutels und die zumindest eine Spannvorrichtung des Temperiermoduls der Beutel flächig an die Innenwand des Temperiermoduls angelegt wird; und
Temperieren der Babynahrung.

Vorzugsweise umfasst das Bereitstellen eines Beutels das Bereitstellen eines Beutels mit einer Kammer,
wobei der Beutel derart in das Temperiermoduls eingesetzt wird, dass der Spannvorsprung an dem Anschlusselement auf der ersten Spannvorrichtung des Temperiermoduls aufliegt und der zumindest eine Magnet an dem Beutel mit dem zumindest einen Magnet in oder an der Temperiermodul-Bodenfläche in Verbindung tritt.

Alternativ kann das Bereitstellen eines Beutels das Bereitstellen eines Beutels mit einer Kammer umfassen,
wobei der Beutel derart in das Temperiermodul eingesetzt wird, dass der Spannvorsprung an dem Anschlusselement auf der ersten Spannvorrichtung des Temperiermoduls aufliegt und die Spannlasche des Beutels aus der Spannöffnung in der Temperiermodul-Bodenfläche zumindest teilweise herausgezogen ist.

Weiterhin kann das Bereitstellen eines Beutels das Bereitstellen eines Beutels mit einer Kammer umfassen,
wobei der Beutel derart in das Temperiermodul eingesetzt wird, dass der erste Spannvorsprung an dem Anschlusselement auf der ersten Spannvorrichtung des Temperiermoduls aufliegt und der zweite Spannvorsprung an dem Spanndeckel in die zweite Spannvorrichtung des Temperiermoduls eingreift.

Alternativ kann das Bereitstellen eines Beutels das Bereitstellen eines Beutels mit zwei Kammern umfassen,
wobei der Trennbereich durch Aufbringen von Kraft zumindest teilweise geöffnet wird und die in der ersten und zweiten Kammer enthaltenen Komponenten miteinander zu einer Babynahrung vermischt werden bevor der Beutel in das Temperiermodul eingesetzt wird.

Vorzugsweise wird der Beutel derart in das Temperiermodul eingesetzt, dass die zumindest eine Spannstrebe des Beutels entlang der Längsrichtung in die Spannvertiefung des Temperiermoduls eingeschoben wird.

Bevorzugterweise wird der Beutel derart in das Temperiermodul eingesetzt, dass der Spannvorsprung an dem ersten Anschlusselement auf der ersten Spannvorrichtung des Temperiermoduls aufliegt und der zumindest eine Magnet des Beutels mit dem zumindest einen Magnet in oder an der Temperiermodul-Bodenfläche in Verbindung tritt.

Vorzugsweise wird der Beutel derart in das Temperiermodul eingesetzt, dass der Spannvorsprung an dem ersten Anschlusselement auf der ersten Spannvorrichtung des Temperiermoduls aufliegt und die Spannlasche des Beutels aus der Spannöffnung in der Temperiermodul-Bodenfläche zumindest teilweise herausgezogen ist.

Weiterhin ist es bevorzugt, dass der Beutel derart in das Temperiermodul eingesetzt wird, dass der Spannvorsprung an dem ersten Anschlusselement auf der ersten Spannvorrichtung des Temperiermoduls aufliegt und der zweite Spannvorsprung an dem zweiten Anschlusselement in die zweite Spannvorrichtung des Temperiermoduls eingreift.

Diese und andere Ziele, Merkmale und Vorteile der vorliegenden Erfindung werden durch das Studium der folgenden detaillierten Beschreibung bevorzugter Ausführungsformen und der beigefügten Zeichnungen klarer. Weiterhin wird darauf hingewiesen, dass, obwohl Ausführungsformen separat beschrieben werden, einzelne Merkmale dieser Ausführungsformen zu zusätzlichen Ausführungsformen kombiniert werden können.
- Fig. 1: zeigt eine erste Ausführungsform eines Beutels zur Aufbewahrung von Babynahrung;
- Fig. 2: zeigt eine erste Ausführungsform eines Temperiermoduls mit einem eingesetzten Beutel gemäß Fig. 1;
- Fig. 3: zeigt eine zweite Ausführungsform eines Beutels zur Aufbewahrung von Babynahrung;
- Fig. 4: zeigt eine zweite Ausführungsform eines Temperiermoduls mit einem eingesetzten Beutel gemäß Fig. 3;
- Fig. 5: zeigt eine dritte Ausführungsform eines Beutels zur Aufbewahrung von Babynahrung;
- Fig. 6: zeigt eine dritte Ausführungsform eines Temperiermoduls mit einem eingesetzten Beutel gemäß Fig. 5;
- Fig. 7: zeigt eine vierte Ausführungsform eines Beutels zur Aufbewahrung von Babynahrung;
- Fig. 8: zeigt eine vierte Ausführungsform eines Temperiermoduls mit einem eingesetzten Beutel gemäß Fig. 7;
- Fig. 9: zeigt einen Beutel gemäß der ersten Ausführungsform mit zwei Kammern;
- Fig. 10: zeigt einen Beutel gemäß der zweiten Ausführungsform mit zwei Kammern;
- Fig. 11: zeigt einen Beutel gemäß der dritten Ausführungsform mit zwei Kammern;
- Fig. 12: zeigt einen Beutel gemäß der vierten Ausführungsform mit zwei Kammern
- Fig.13: zeigt ein Temperierverfahren gemäß einer bevorzugten Ausführungsform zum Temperieren der Babynahrung in dem Beutel; und
- Fig. 14: zeigt weitere Ausführungformen eines Trennbereichs für einen Beutel mit zwei Kammern.

Im Folgenden werden unterschiedliche Ausführungsformen von Temperiermodulen 100 beschrieben, in die jeweils ein Beutel 1 mit Babynahrung zumindest teilweise einsetzbar ist, um die Babynahrung zu temperieren.

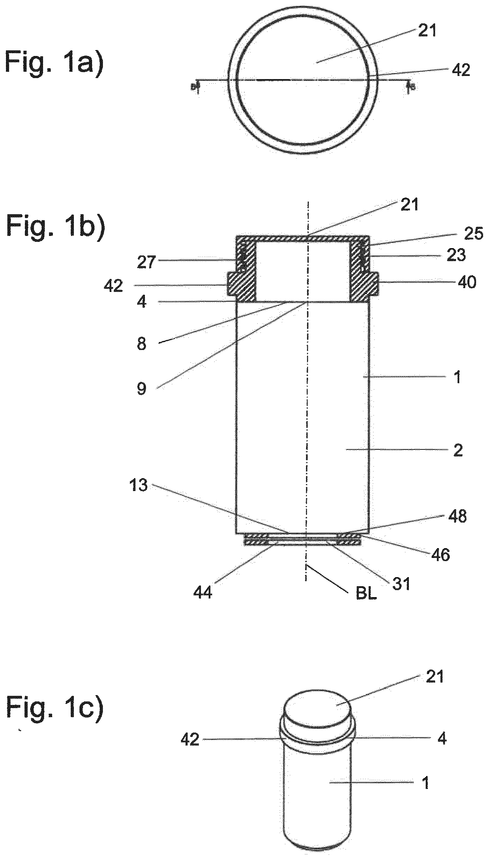

**Figur 1** zeigt eine erste Ausführungsform eines Beutels 1. Figur 1a) zeigt dabei eine Draufsicht des Beutels 1, Figur 1b) eine Schnittansicht des Beutels 1 entlang der Schnittachse B-B und Figur 1c) eine perspektivische Ansicht des Beutels 1.

Der Beutel 1 ist vorzugsweise aus Kunststoff (z.B. Polyethylen oder eine Verbundfolie aus Polyethylen und Polyamid) im Wesentlichen in der Form eines Schlauches gefertigt. Insbesondere ist der Schlauch aus einem Stück ohne Nähte gefertigt und weist vorzugsweise eine Beutel-Längsachse BL auf. Weiterhin kann das Beutelmaterial wärmeleitende Partikel, vorzugsweise Aluminium- und/oder Kupferpartikel, umfassen, die eine verbesserte Temperierung der Babynahrung in dem Beutel 1 ermöglichen.

Der Beutel 1 weist eine Kammer 2 auf, welche an einem ersten Ende 9 durch eine Öffnung 8 zugänglich ist. An einem zweiten Ende 13 des Beutels 1, welches dem ersten Ende 9 entgegengesetzt ist, ist der Beutel 1 geschlossen, vorzugsweise durch eine Schweißnaht. Die Beutel-Längsachse BL erstreckt sich von dem ersten Ende 9 zu dem zweiten Ende 13 des Beutels 1. Insbesondere ist die Öffnung 8 dazu ausgelegt, mit einer Babynahrung befüllt zu werden. Beispielsweise kann in den Beutel 1 vorgefertigte Babymilch oder Babybrei, oder auch Muttermilch eingefüllt werden.

Um die Kammer 2 für den Transport zu verschließen, kann die Öffnung 8 in dem Beutel 1 mittels eines entsprechenden Verschlusses verschlossen werden. Hierzu kann an der Öffnung 8 ein Anschlusselement 4 bereitgestellt sein. Das Anschlusselement 4 kann dabei als ringförmiges Element ausgebildet sein, welches vorzugsweise aus Kunststoff gefertigt ist. Insbesondere ist es hierbei vorteilhaft, wenn das Anschlusselement 4 im Gegensatz zu dem Beutel 1 selbst starr oder mit einer höheren Steifigkeit ausgebildet ist. Um das Anschlusselement 4 mit dem Beutel 1 zu verbinden, kann das Anschlusselement 4 mit dem Beutel 1 verschweißt sein.

Wie in Figur 1b) gezeigt, kann der Verschluss als Deckel 20 ausgebildet sein, welcher mit dem Anschlusselement 4 verbindbar ist. Der Deckel 20 kann dabei mittels eines Einhak- bzw. Klickmechanismus mit dem Anschlusselement 4 verbunden werden. Alternativ kann das Anschlusselement 4 und/oder der Deckel 20 eine oder mehrere Dichtlippen aufweisen, die wenn in Kontakt mit dem jeweils anderen Element sowohl eine abdichtende als auch eine fixierende Funktion aufweisen. Figur 1b) zeigt hingegen einen Schraubmechanismus. An einer äußeren Mantelfläche 23 ("Außenseite") des Anschlusselements 4 und an einer inneren Mantelfläche 25 des Deckels 20 befinden sich jeweils zumindest bereichsweise ein Gewinde 27, die im Verbindungsprozess ineinander eingreifen bzw. miteinander wechselwirken. Die äußere Mantelfläche 23 verläuft dabei vorzugsweise parallel zu der Beutel-Längsachse BL.

Das Anschlusselement 4 kann insbesondere auch dazu verwendet werden, mit einem Dispenser verbunden zu werden, welcher beispielsweise dazu ausgelegt ist, fertige Babynahrung in die Kammer 2 abzugeben. Es ist insbesondere bevorzugt, dass der Beutel 1 mit einem Dispenser wie in der Druckschrift WO 2017/121638 A1 veröffentlicht und/oder in der deutschen Patentanmeldung DE 10 2018 009 551, kompatibel ist, die durch Bezugnahme in Vollständigkeit hierin mit einbezogen sind.

Das Anschlusselement 4 kann hier direkt oder mittels eines Adapters an den Dispenser angeschlossen werden. Die Menge der Babynahrung kann manuell an dem Dispenser eingestellt werden. Alternativ gibt der Dispenser vorbestimmte bzw. vorportionierte Einheiten an den Beutel 1 ab. Der Dispenser kann jedoch auch einen Sensor aufweisen, der einen verbundenen Beutel 1 und ergänzend auch die Größe des Beutels 1 automatisch erkennt. Alternativ könnte in oder an dem Anschlusselement 4 hierzu auch ein RFID-Tag vorgesehen bzw. eingearbeitet sein. Sobald der Dispenser einen Beutel 1 erkennt, kann anschließend automatisch eine entsprechende Menge einer Babynahrung abgegeben werden. Durch die Kompatibilität mit einem Dispenser kann die Kammer 2 somit schnell und präzise befüllt werden.

Alternativ oder ergänzend kann das Anschlusselement 4 mit einer Milchpumpe zum Abpumpen von Muttermilch verbunden werden.

Die Beutelgröße ist dabei so ausgelegt, dass vorzugsweise zwischen 50ml und 300ml Babynahrung eingefüllt werden können. Besonders bevorzugt ist eine Größe, die es erlaubt 250ml Babynahrung einzufüllen. Weiterhin kann der Beutel 1 bereichsweise gefaltet sein, so dass die Kammer 2 verkleinert ist. Nach Bedarf kann die Faltung entfaltet werden. Der gefaltete Bereich kann mit einem Klebestreifen und/oder einer Klammer fixiert werden.

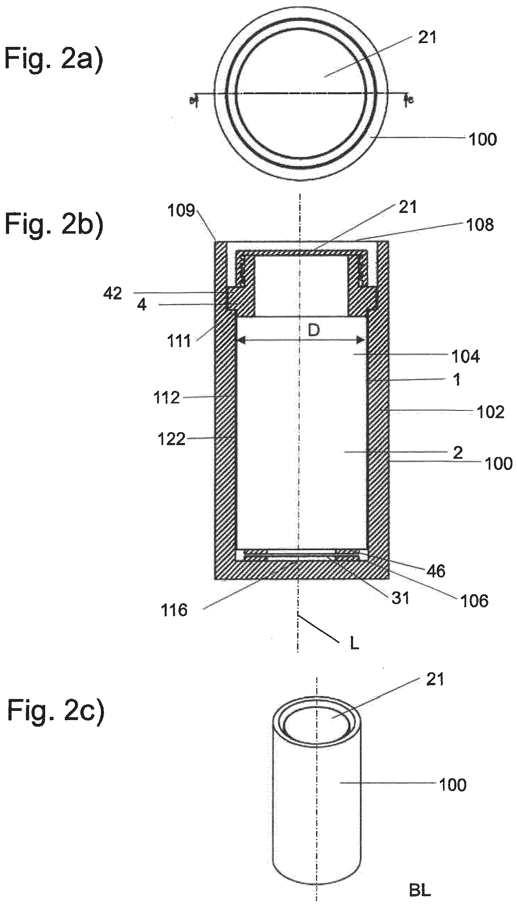

Um nun die eingefüllte Babynahrung im Bedarfsfall temperieren zu können, ist der Beutel 1 in ein Temperiermodul 100 wie beispielsweise in Figur 2 gezeigt einzusetzen, dessen Temperiermodul-Innenraum 104 temperierbar ist. Insbesondere ist der Temperiermodul-Innenraum 104 hierbei durch eine beheizte Innenwand 112 temperierbar.

Da es sich bei dem Beutel 1 um ein flexibles Behältnis handelt, weist der Beutel 1 jedoch häufig Knickstellen auf, an denen der Beutel 1 einknickt. Mit anderen Worten kann der Beutel 1 selbst nicht in einer aufrechten Position gehalten werden. Insbesondere an den Knickstellen befindet sich in einem in das Temperiermodul 100 eingesetzten Zustand Luft zwischen dem Beutel 1 und der Innenwand 112 des Temperiermoduls 100, die eine isolierende Wirkung aufweist und somit eine Wärmeübertragung auf den Beutel 1 bzw. die Babynahrung verschlechtert bzw. verlangsamt.

Um zu gewährleisten, dass derartige Knickstellen vermieden werden und der Beutel 1 flächig an der Innenwand 112 des Temperiermoduls 100 anliegt, weist der Beutel 1 verschiedene Spannmittel auf, die den Beutel 1 in dem Temperiermodul 100 in einer aufrechten Position halten können.

Wie in Figur 1b) und 1c) gezeigt, weist der Beutel 1 gemäß der ersten Ausführungsform ein erstes Spannmittel 40 an dem Anschlusselement 4 auf, welches als ein zumindest bereichsweise umlaufender Spannvorsprung 42 ausgebildet ist. Der zumindest bereichsweise umlaufende Spannvorsprung 42 befindet sich an der äußeren Mantelfläche 23 des Anschlusselements 4, so dass sich der Durchmesser des Anschlusselements 4 durch den zumindest bereichsweise umlaufenden Spannvorsprung 42 vergrößert.

Zusätzlich weist der Beutel 1 an dem zweiten Ende 13 des Beutels ein zweites Spannmittel 44 auf. Das zweite Spannmittel 44 umfasst eine Spannplatte 46, welche an einer Bodenfläche 48 des Beutels 1 befestigt ist. An oder in der Spannplatte 46 befindet sich zumindest ein Magnet 31.

**Figur 2** zeigt eine erste Ausführungsform eines Temperiermoduls 100, in die beispielsweise der Beutel 1 gemäß Figur 1 einsetzbar ist und das Spannvorrichtungen aufweist, die mit den Spannmittel des Beutels 1 verbindbar sind, um den Beutel 1 in einer aufrechten Position in dem Temperiermodul 100 zu halten. Insbesondere kann hierdurch der Beutel 1 flächig an der Innenwand 112 des Temperiermoduls 100 gehalten werden, um ein schnelles Erwärmen der Babynahrung zu gewährleisten.

Figur 2a) zeigt eine Draufsicht des Temperiermoduls 100, Figur 2b) eine Schnittansicht des Temperiermoduls 100 entlang der Schnittachse B-B und Figur 2c) eine perspektivische Ansicht des Temperiermoduls 100.

Das Temperiermodul 100 weist ein Temperiermodul-Gehäuse 102 auf, welches vorzugsweise rotationssymmetrisch ausgebildet ist. Es kann jedoch auch nur der Temperiermodul-Innenraum 104 rotationssymmetrisch geformt sein, während die äußere Form des Temperiermodul-Gehäuses 102 frei wählbar ist. Zudem weist das Temperiermodul-Gehäuse 102 eine Temperiermodul-Bodenfläche 106 auf. Auf einer der Temperiermodul-Bodenfläche 106 entgegengesetzten Seite befindet sich eine Temperiermodul-Einsetzöffnung 108, über die der Beutel 1 zumindest teilweise in das Temperiermodul 100 einsetzbar ist.

Während des Temperiervorgangs kann die Temperiermodul-Einsetzöffnung 108 durch einen Deckel (nicht gezeigt) verschlossen werden. Es ist jedoch auch möglich, dass ein auf den Beutel 1 aufgesetzter Babysauger, welcher mit dem Anschlusselement 4 verbindbar ist, die Temperiermodul-Einsetzöffnung 108 im Wesentlichen verschließt. Insbesondere ist es bevorzugt, dass der Durchmesser des umlaufenden Spannvorsprungs 42 an dem Anschlusselement 4 größer ist als der Durchmesser der Temperiermodul-Einsetzöffnung 108, so dass ein Hineinrutschen des Anschlusselements 4 in den Temperiermodul-Innenraum 104 verhindert werden kann. Der umlaufende Spannvorsprung 42 würde hierbei auf einem umlaufenden Rand 109 des Temperiermoduls 100, welcher die Temperiermodul-Einsetzöffnung 108 nach außen begrenzt, aufliegen. Alternativ, wie in Figur 2b) gezeigt, kann sich der Durchmesser D des Temperiermodul-Innenraums 104 in einem Bereich benachbart zu der Temperiermodul-Einsetzöffnung 108 aufweiten, so dass eine Stufe als Spannauflagefläche 111 ausgebildet wird. Es ist bevorzugt, dass der Durchmesser D des Temperiermodul-Innenraums 104 von der Temperiermodul-Einsetzöffnung 108 bis zu der Spannauflagefläche 111 erweitert ist. Wird der Beutel 1 in den Temperiermodul-Innenraum 104 eingesetzt, kann der umlaufende Spannvorsprung 42 auf der Spannauflagefläche 111 aufliegen, so dass ein Hineinrutschen des Anschlusselements 4 in den Temperiermodul-Innenraum 104 verhindert werden kann. Der umlaufende Rand 109 des Temperiermoduls 100 und die Spannauflagefläche 111 dienen somit je nach Ausführungsform als "erste Spannvorrichtung". Um den Beutel 1 in dem Temperiermodul 100 zu arretieren, kann der Spannvorsprung 42 auf den umlaufende Rand 109 oder die Spannauflagefläche 111 geklickt werden.

Bevorzugterweise weist das Temperiermodul 100 eine Höhe H von etwa 80 mm bis etwa 130 mm auf. Die Wandstärke des Temperiermoduls 100 liegt vorzugsweise in einem Bereich zwischen etwa 0,5 mm und etwa 1,0 mm. Besonders bevorzugt ist eine Wandstärke von etwa 0,8 mm. Der Durchmesser D des Temperiermoduls 100 ist vorzugsweise zwischen etwa 45 und etwa 70 mm.

Die Höhe H des Temperiermodul-Innenraums 104 ist vorzugsweise so eingestellt, dass der Beutel 1 in einer möglichst gestreckten Position in dem Temperiermodul-Innenraum 104 angeordnet werden kann. Hierdurch kann ein schnelleres Temperieren des Inhalts des Beutels 1 bzw. der Babynahrung erzielt werden. Die Höhe H des Temperiermodul-Innenraums 104 kann dabei entweder durch die Länge des Temperiermoduls 100 als solches definiert sein oder kann beliebig durch Temperiermodul-Verlängerungselemente kombiniert werden. Die einzelnen Temperiermodul-Verlängerungselemente können zusammengeklickt oder miteinander verschraubt werden. Weist das Temperiermodul 100 mehrere Verlängerungselemente auf, weist das oberste Verlängerungselement die erste Spannvorrichtung auf.

An zumindest einem Bereich der Innenwand 112 des Temperiermodul-Gehäuses 102 ist zumindest ein Heizelement angeordnet. Durch das Heizelement ist die Innenwand 112 des Temperiermodul-Gehäuses 102 beheizbar, vorzugsweise befindet sich das Heizelement dabei außerhalb des Temperiermodul-Innenraums 104. Mit anderen Worten kann die Innenwand 112 von außen durch das Heizelement temperiert werden und die Wärme wird über die Innenwand 112 an den Temperiermodul-Innenraum 104 abgegeben werden. Das Heizelement kann bevorzugt als Heizmatte 122 ausgebildet sein, welche zumindest bereichsweise die Innenwand 112 des Temperiermodul-Gehäuses 102 überlappt. Alternativ kann das Heizelement auch als Heizplatte, Heizfolie oder Heizplatine ausgebildet sein. Im Folgenden wird exemplarisch jedoch nur auf die Heizmatte 122 eingegangen. Die Erklärungen gelten jedoch auch für die anderen Alternativen eines Heizelements.

Die Innenwand 112 des Temperiermodul-Gehäuses 102 ist vorzugsweise zumindest teilweise aus einem wärmeleitenden Material gefertigt, wie zum Beispiel aus Aluminium oder Kupfer. Hierzu kann die Innenwand 112 als Rohrelement aus Aluminium oder Kupfer gefertigt sein. Als Fertigungstoleranzen für den Durchmesser des Rohrelements werden +/- 1mm bevorzugt. Hierdurch kann die Wärme, die durch die Heizmatte 122 erzeugt wird, im Wesentlichen gleichmäßig durch das Temperiermodul-Gehäuse 102 verteilt und in den Temperiermodul-Innenraum 104 abgegeben werden. Somit kann der Inhalt des Beutels 1 bzw. die Babynahrung gleichmäßig erwärmt werden.

Um eine möglichst schnelle Temperierung des Inhalts des Beutels 1 bzw. der Babynahrung zu erzielen, ist der Temperiermodul-Innenraum 104 im Verhältnis zu dem Beutel 1 so dimensioniert, dass der Beutel 1 im eingesetzten Zustand flächig mit der Innenwand 112 in Berührung kommt. Je mehr Fläche des Beutels 1 mit der Innenwand 112 in Berührung ist, desto schneller kann die Erwärmung erfolgen. Besteht das Temperiermodul-Gehäuse 102 aus mehreren Temperiermodul-Verlängerungselementen 110 weist vorzugsweise jedes Temperiermodul-Verlängerungselement 110 zumindest ein Heizelement auf. Um die einzelnen Heizelemente an den Temperiermodul-Verlängerungselementen 110 jeweils mit Energie zu versorgen, ist es erforderlich, dass eine Konnektierung zwischen den Temperiermodul-Verlängerungselementen 110 bereitgestellt wird, die es ermöglicht, Energie zu den einzelnen Heizelementen zu transferieren.

Wie bereits oben erwähnt, ist es zusätzlich vorteilhaft, wenn in das Material des Beutels 1 wärmeleitende Partikel eingearbeitet sind. Diese ermögliche eine noch bessere Übertragung der Wärme an die Babynahrung. Die Partikel können hierbei Aluminium- oder Kupferpartikel sein.

In der Temperiermodul-Bodenfläche 106 kann als "zweite Spannvorrichtung" außerdem zumindest ein Magnet 116 angeordnet sein, der im eingesetzten Zustand mit dem zumindest einen Magneten 31 des Beutels 1 zusammenwirkt (siehe z.B. Figur 1b)). Der Magnet 31 in oder an der Spannplatte 46 des Beutels 1 ist im eingesetzten Zustand des Beutels 1 benachbart zu der Temperiermodul-Bodenfläche 106 angeordnet. Hierdurch wird der Beutel 1 an der Temperiermodul-Bodenfläche 106 fixiert.

Durch das Zusammenwirken der Spannmittel des Beutels 1 und der Spannvorrichtungen des Temperiermoduls 100 wird der Beutel 1 in einer aufrechten Position gehalten und der Beutel 1 kann flächig an der beheizbaren Innenwand 112 des Temperiermoduls 100 gehalten werden. Somit ist eine schnelle Erwärmung der Babynahrung möglich.

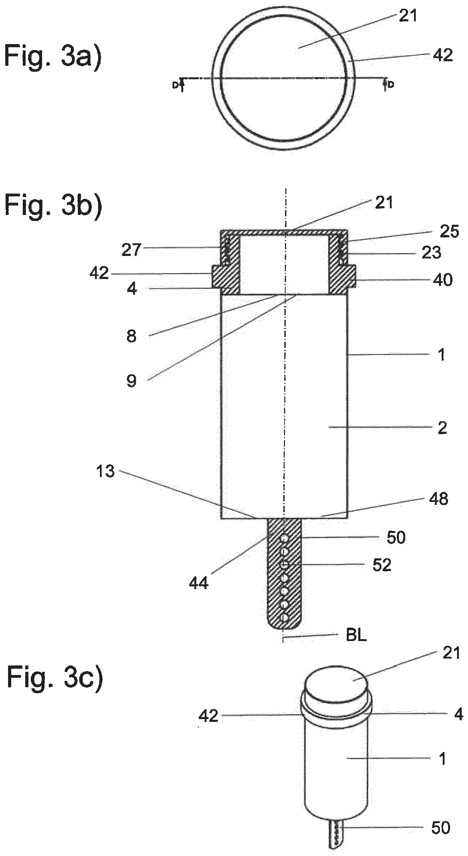

**Figur 3** zeigt eine zweite Ausführungsform eines Beutels 1. Figur 3a) zeigt dabei eine Draufsicht des Beutels 1, Figur 3b) eine Schnittansicht des Beutels 1 entlang der Schnittachse D-D und Figur 3c) eine perspektivische Ansicht des Beutels 1.

Die zweite Ausführungsform des Beutels 1 unterscheidet sich von der ersten Ausführungsform des Beutels 1 lediglich in dem zweiten Spannmittel 44. Die restliche Ausgestaltung des Beutels 1 bleibt gleich, so dass hier nur die Unterschiede beschrieben werden.

Insbesondere weist die zweite Ausführungsform des Beutels 1 keine Spannplatte 46 mit zumindest einem Magneten 31 auf, sondern eine Spannlasche 50, welche an der Bodenfläche 48 des Beutels 1 befestigt ist. Vorzugsweise erstreckt sich die Spannlasche 50 in der Beutel-Längsachse BL.

Die Spannlasche 50 kann entlang der Beutel-Längsachse BL eine oder mehrere Fixierungsöffnungen 52 aufweisen.

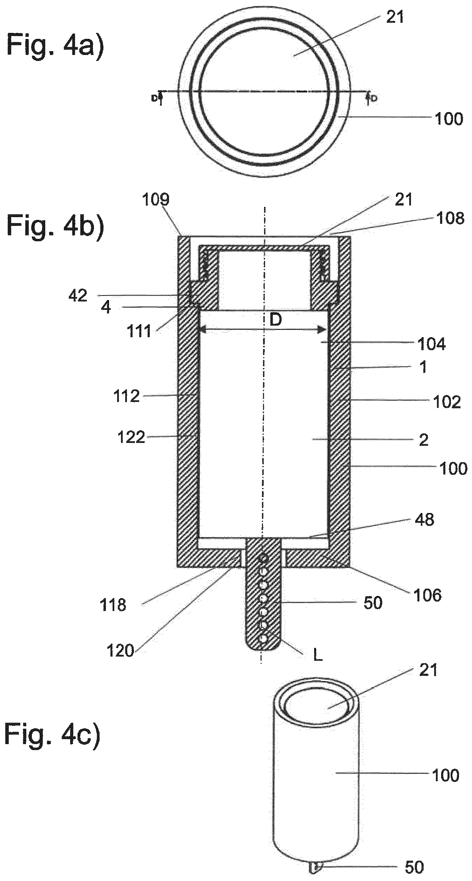

**Figur 4** zeigt eine zweite Ausführungsform eines Temperiermoduls 100, in die beispielsweise der Beutel 1 gemäß Figur 3 einsetzbar ist und das Spannvorrichtungen aufweist, die mit den Spannmitteln des Beutels 1 aus Figur 3 verbindbar sind, um den Beutel 1 in einer aufrechten Position in dem Temperiermodul 100 zu halten. Insbesondere kann hierdurch der Beutel 1 flächig an der Innenwand 112 des Temperiermoduls 100 gehalten werden, um ein schnelles Erwärmen der Babynahrung zu gewährleisten.

Figur 4a) zeigt eine Draufsicht des Temperiermoduls 100, Figur 4b) eine Schnittansicht des Temperiermoduls 100 entlang der Schnittachse D-D und Figur 4c) eine perspektivische Ansicht des Temperiermoduls 100.

Das Temperiermodul 100 gemäß der zweiten Ausführungsform unterscheidet sich hier lediglich von dem Temperiermodul 100 der ersten Ausführungsform in der zweiten Spannvorrichtung, so dass hier nur die zweite Spannvorrichtung beschrieben wird.

Insbesondere weist die zweite Spannvorrichtung hier eine Spannöffnung 118 in der Temperiermodul-Bodenfläche 106 auf. Über die Spannöffnung 118 kann die Spannlasche 50 aus dem Temperiermodul-Innenraum104 herausgeführt werden. Durch ein Ziehen an der Spannlasche 50 kann die Bodenfläche 48 des Beutels 1 in Richtung zu der Temperiermodul-Bodenfläche 106 gezogen werden, um den Beutel 1 in einer aufrechten Position in dem Temperiermodul 100 zu halten und eine schnelle Erwärmung zu gewährleisten. Um keine Wärmeverluste durch die Spannöffnung 118 zu erleiden, ist diese vorzugsweise nur geringfügig größer als die Spannlasche 50. Vorzugsweise ist an der Spannöffnung 118 eine Gummidichtung angebracht.

Die Spannlasche 50 kann mit Hilfe einer der Fixierungsöffnungen 52 an einer Unterseite 120 des Temperiermoduls 100 fixiert werden. An der Unterseite 120 des Temperiermoduls 100 kann hier ein entsprechender Fixierstift vorgesehen sein, der in die Fixierungsöffnung 52 eingreift.

Durch das Zusammenwirken der Spannmittel des Beutels 1 und der Spannvorrichtungen des Temperiermoduls 100 wird auch hier der Beutel 1 in einer aufrechten Position gehalten und der Beutel 1 kann flächig an der beheizbaren Innenwand 112 des Temperiermoduls 100 gehalten werden. Somit ist eine schnelle Erwärmung der Babynahrung möglich.

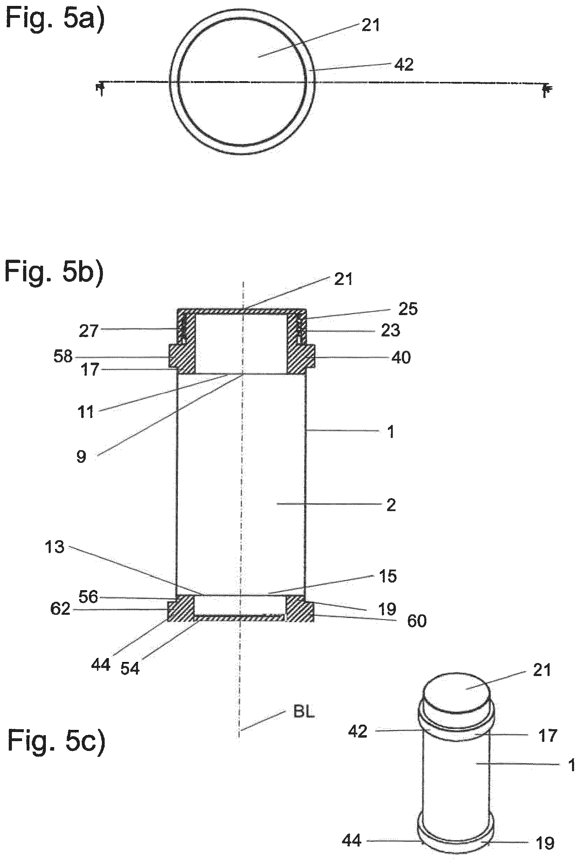

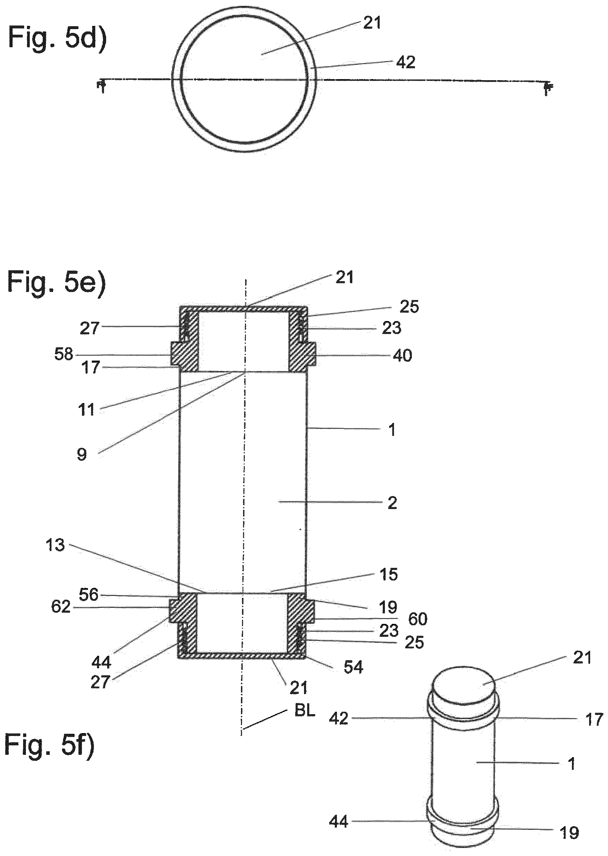

**Figur 5** zeigt eine dritte Ausführungsform eines Beutels 1. Figuren 5a) und 5d) zeigen dabei jeweils eine Draufsicht des Beutels 1, Figuren 5b) und 5e) eine Schnittansicht des Beutels 1 entlang der Schnittachse F-F und Figuren 5c) und 5f) eine perspektivische Ansicht des Beutels 1.

Die dritte Ausführungsform des Beutels 1 unterscheidet sich von der ersten und zweiten Ausführungsform des Beutels 1 lediglich in dem zweiten Spannmittel 44. Die restliche Ausgestaltung des Beutels 1 bleibt gleich, so dass hier nur die Unterschiede beschrieben werden.

Die Öffnung 8 des Beutels 1 an dem ersten Ende 9 des Beutels 1 ist hier eine erste Öffnung 11 und der zumindest bereichsweise umlaufende Spannvorsprung 42 an dem Anschlusselement 4 wird als erster Spannvorsprung 58 bezeichnet. Der Beutel 1 ist in dieser Ausführungsform an dem zweiten Ende 13 des Beutels 1 jedoch nicht geschlossen, sondern weist eine zweite Öffnung 15 auf.

Die zweite Öffnung 15 ist mittels eines Spanndeckels 54 verschlossen. Um das zweite Spannmittel 44 auszubilden, weist der Spanndeckel 54 an einer Außenseite 60 einen zweiten zumindest bereichsweise umlaufenden Spannvorsprung 62 auf. Die Außenseite 60 verläuft dabei vorzugsweise parallel zu der Beutel-Längsachse BL. Insbesondere kann der Spanndeckel 54 rotationssymmetrisch ausgebildet sein.

Ist der zweite Spannvorsprung 62 nur abschnittsweise ausgebildet, können die einzelnen Abschnitte gleich groß oder unterschiedlich groß ausgebildet sein. Die Abstände zwischen den Abschnitten können gleich groß oder unterschiedlich groß sein. Insbesondere können die Abschnitte mit Abschnitten des ersten Spannvorsprungs 58 bezüglich der Beutel-Längsrichtung BL ausgerichtet sein oder auch versetzt zueinander sein.

Der Spanndeckel 54 kann zum einen die zweite Öffnung 15 derart verschließen, dass die zweite Öffnung 15 nicht öffenbar ist, wie in den Figuren 5a) bis 5c) gezeigt. Hierbei kann der Spanndeckel 54 vorzugsweise einteilig ausgebildet sein und fest mit Beutel 1 verbunden sein. Wie in den Figuren 5d) bis 5f) gezeigt, kann der Spanndeckel 54 jedoch auch zweiteilig ausgebildet sein. Hier wird das Anschlusselement 4 zu einem "ersten Anschlusselement" 17 und der Spanndeckel 54 selbst weist ein zweites Anschlusselement 19 auf. An dem zweiten Anschlusselement 19, das mit dem Beutel 1 verbunden ist, befindet sich hier an dessen äußerer Mantelfläche 56 der zweite Spannvorsprung 62. Die äußere Mantelfläche 56 des zweiten Spannvorsprungs 62 verläuft vorzugsweise parallel zu der Beutel-Längsachse BL. Weiterhin ist es bevorzugt, dass das erste und zweite Anschlusselement 17, 19 identisch ausgebildet sind. Das zweite Anschlusselement 19 kann entsprechend dem ersten Anschlusselement 19 mit einem Verschluss verschlossen werden. Wie in Figur 5b) gezeigt, kann die zweite Öffnung 15 mit einem Deckel 21, welcher auf das zweite Anschlusselement 19 aufgeschraubt ist, verschlossen werden. Andere Verschlussmechanismen wie bereits oben beschrieben sind jedoch auch hier möglich.

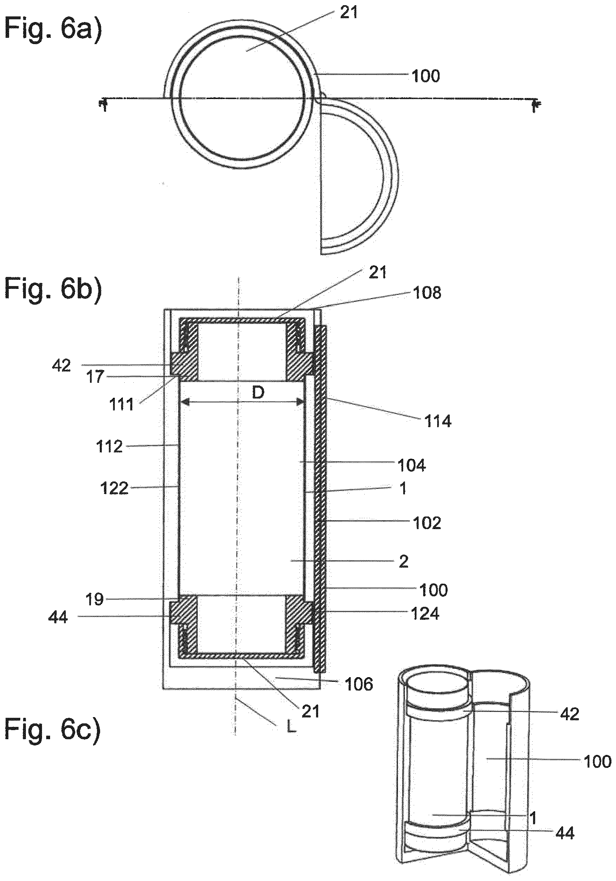

**Figur 6** zeigt eine dritte Ausführungsform eines Temperiermoduls 100, in die beispielsweise der Beutel 1 gemäß Figur 5 einsetzbar ist und das Spannvorrichtungen aufweist, die mit den Spannmitteln des Beutels 1 aus Figur 5 verbindbar sind, um den Beutel 1 in einer aufrechten Position in dem Temperiermodul 100 zu halten. Insbesondere kann hierdurch der Beutel 1 flächig an der Innenwand 112 des Temperiermoduls 100 gehalten werden, um ein schnelles Erwärmen der Babynahrung zu gewährleisten.

Figur 6a) zeigt eine Draufsicht des Temperiermoduls 100, Figur 6b) eine Schnittansicht des Temperiermoduls 100 entlang der Schnittachse F-F und Figur 6c) eine perspektivische Ansicht des Temperiermoduls 100.

Das Temperiermodul 100 gemäß der dritten Ausführungsform unterscheidet sich hier lediglich von dem Temperiermodul 100 der ersten Ausführungsform und zweiten Ausführungsform in der zweiten Spannvorrichtung, so dass hier nur die zweite Spannvorrichtung beschrieben wird.

Wie in Figur 6b) gezeigt, weitet sich in der dritten Ausführungsform der Durchmesser D des Temperiermodul-Innenraums 104 benachbart zu der Temperiermodul-Bodenfläche 106 auf, so dass eine Stufe in der Innenwand 112 entsteht. Durch die Erweiterung des Durchmessers D bildet sich eine umlaufende Spannvertiefung 124 als zweite Spannvorrichtung in dem Temperiermodul 100 aus. Vorzugsweise erstreckt sich die Spannvertiefung 124 bezüglich einer Längsachse L des Temperiermoduls von der Stufe bis zu der Temperiermodul-Bodenfläche 106. Die Längsachse L des Temperiermoduls 100 erstreckt sich von der Temperiermodul-Einsetzöffnung 108 zu der Temperiermodul-Bodenfläche 106.

Die umlaufende Spannvertiefung 124 ist dazu ausgelegt, dass der zweite Spannvorsprung 62 des Beutels 1 eingeschoben werden kann. Um ein derartige Einschieben zu ermöglichen, kann das Temperiermodul 100 öffenbar sein. Hierzu kann das Temperiermodul-Gehäuse 102 bezüglich der Längsachse L zweigeteilt sein. Ein Teil des Temperiermodul-Gehäuses 102 kann dabei entfernt werden oder wie in Figur 6 gezeigt, durch ein Scharnier 114, das sich entlang der Längsachse L erstreckt, verschwenkbar sein.

Durch das Zusammenwirken der Spannmittel des Beutels 1 und der Spannvorrichtungen des Temperiermoduls 100 wird auch hier der Beutel 1 in einer aufrechten Position gehalten und der Beutel 1 kann flächig an der beheizbaren Innenwand 112 des Temperiermoduls 100 gehalten werden. Somit ist eine schnelle Erwärmung der Babynahrung möglich.

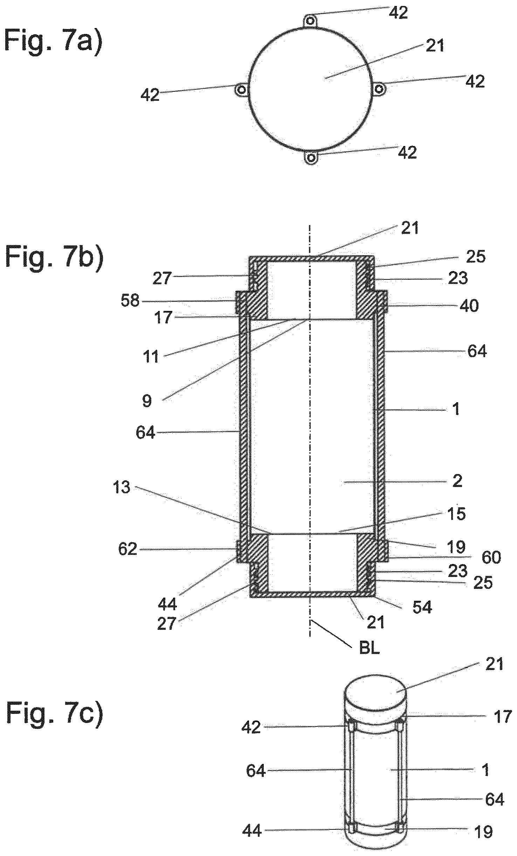

**Figur 7** zeigt eine vierte Ausführungsform eines Beutels 1. Figur 7a) zeigt dabei eine Draufsicht des Beutels 1, Figur 7b) eine Schnittansicht des Beutels 1 und Figur 5c) eine perspektivische Ansicht des Beutels 1.

Die vierte Ausführungsform des Beutels 1 unterscheidet sich von der dritten Ausführungsform des Beutels 1 lediglich in dem zweiten Spannmittel 44. Die restliche Ausgestaltung des Beutels 1 bleibt gleich, so dass hier nur die Unterschiede beschrieben werden.

Im Speziellen weist das zweite Spannmittel 44 hier zusätzlich zumindest eine Spannstrebe 64 auf, die sich in der Beutel-Längsachse BL erstreckt und mit dem ersten und zweiten Spannvorsprung 58, 62 verbunden ist. Ebenfalls ist es möglich, dass die Spannstrebe 64 einstückig mit dem ersten und zweiten Spannvorsprung 58, 62 ausgebildet ist.

Wie oben beschrieben, können die Spannvorsprünge 58, 62 entweder vollständig umlaufend oder nur bereichsweise umlaufend ausgestaltet sein. Wie in den Figuren 7a) bis c) gezeigt, können die Abschnitte der Spannvorsprünge 58 ,62 insbesondere nur dort ausgebildet sein, wobei die Spannstreben 64 ausgebildet sind. Figur 7 zeigt vier Spannstreben 64, die gleichmäßig um den Beutel 1 herum angeordnet sind. Die Spannstreben 64 können zueinander jedoch auch unterschiedlich große Abstände haben.

Figur 7b) zeigt hier einen Spanndeckel 54, welcher öffenbar ausgebildet ist. Wie bereits bezüglich Figur 5 beschrieben wurde, kann der Spanndeckel 54 auch hier so ausgebildet sein, dass die zweite Öffnung 15 fest durch den Spanndeckel 54 verschlossen ist und damit nicht öffenbar ist.

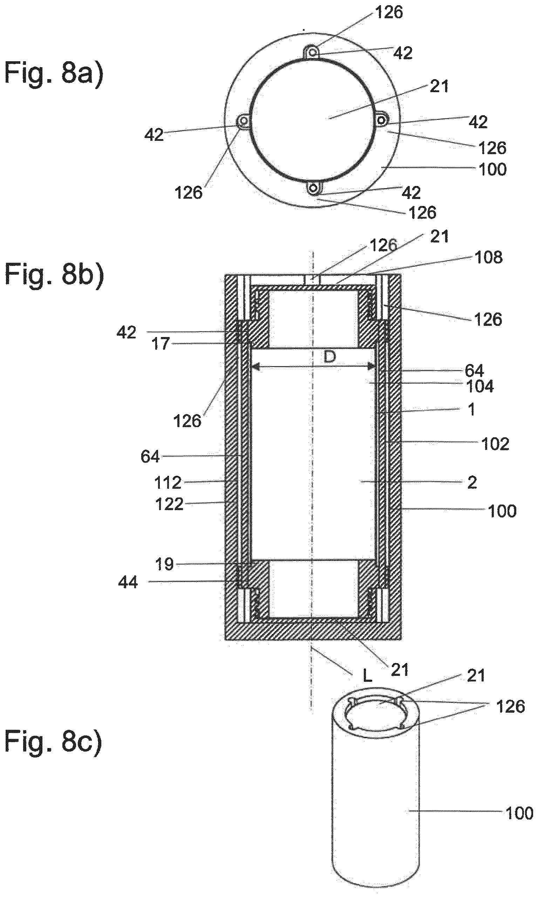

**Figur 8** zeigt eine vierte Ausführungsform eines Temperiermoduls 100, in die beispielsweise der Beutel 1 gemäß Figur 7 einsetzbar ist und das Spannvorrichtungen aufweist, die mit den Spannmitteln des Beutels 1 aus Figur 7 verbindbar sind, um den Beutel 1 in einer aufrechten Position in dem Temperiermodul 100 zu halten. Insbesondere kann hierdurch der Beutel 1 flächig an der Innenwand 112 des Temperiermoduls 100 gehalten werden, um ein schnelles Erwärmen der Babynahrung zu gewährleisten.

Figur 8a) zeigt eine Draufsicht des Temperiermoduls 100, Figur 8b) eine Schnittansicht des Temperiermoduls 100 und Figur 8c) eine perspektivische Ansicht des Temperiermoduls 100.

Entgegen der vorangehend beschriebenen Ausführungsformen der Temperiermodule 100 weist das Temperiermodul 100 der vierten Ausführungsform einen konstanten Durchmesser D auf. Allerdings weist die Innenwand 112 hier als Spannvorrichtung zumindest eine Spannvertiefung 126 auf, die sich in der Längsrichtung L des Temperiermoduls 100 erstreckt. Insbesondere ist die Spannvertiefung 126 derart ausgelegt, dass eine entsprechende Spannstrebe 64 in die Spannvertiefung 126 eingeschoben werden kann. Vorzugsweise erstreckt sich hierzu die Spannstrebe 64 von der Temperiermodul-Einsetzöffnung 108 zu der Temperiermodul-Bodenfläche 106.

Durch das Zusammenwirken der Spannmittel des Beutels 1 und der Spannvorrichtung des Temperiermoduls 100 wird auch hier der Beutel 1 in einer aufrechten Position gehalten und der Beutel 1 kann flächig an der beheizbaren Innenwand 112 des Temperiermoduls 100 gehalten werden. Somit ist eine schnelle Erwärmung der Babynahrung möglich.

Alle bereits beschriebenen Ausführungsformen des Beutels 1 weisen jeweils eine Kammer 2 auf. Der Beutel 1 kann jedoch auch zumindest zwei Kammern aufweisen, wie im Folgenden gezeigt wird.

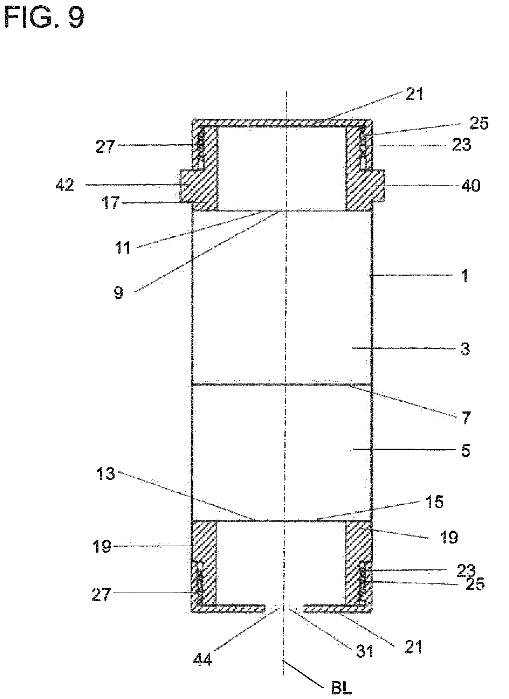

**Figur 9** zeigt hierzu die erste Ausführungsform (siehe hierzu Figur 1) des Beutels 1 mit zwei Kammern.

Figur 9 zeigt einen Beutel 1 zur Herstellung von Babynahrung gemäß einer bevorzugten Ausführungsform. Zur Herstellung von Babynahrung sind im Handel verschiedene Babynahrungskonzentrate verschiedener Hersteller verfügbar, welche wenn gemischt mit Wasser, die benötigte Babynahrung ergibt. Das Babynahrungskonzentrat ist üblicherweise pulverförmig. Insbesondere kann das Babynahrungskonzentrat Milchpulver oder ein Breipulver sein.

Der Beutel 1 weist zumindest eine erste Kammer 3 und eine zweite Kammer 5 auf, welche entlang der Beutel-Längsrichtung BL angeordnet sind. Figur 9 zeigt hierzu eine Schnittansicht entlang der Beutel-Längsrichtung BL. Die Kammern 3, 5 sind durch einen Trennbereich 7 voneinander getrennt bzw. separiert, wobei der Trennbereich 7 vorzugsweise zumindest eine Schweißnaht aufweist. Wie in Figur 9 gezeigt, wird durch den Trennbereich 7 insbesondere eine Einschnürung in dem Beutel 1 erzeugt.

Die entgegengesetzten bzw. gegenüberliegenden Enden des Beutels 1 bezüglich der Beutel-Längsrichtung BL weisen Öffnungen auf. Im Speziellen ist an dem ersten Ende 9 des Beutels 1 benachbart zu der ersten Kammer 3 die erste Öffnung 11 ausgebildet, während an dem zweiten (dem ersten Ende 9 entgegengesetzten) Ende 13 des Beutels 1 benachbart zu der zweiten Kammer 5 die zweite Öffnung 15 ausgebildet ist. Die Öffnungen 11, 15 können dabei gleich groß oder verschieden groß sein. Insbesondere dienen die Öffnungen 11, 15 zum Befüllen der jeweiligen Kammer 3, 5. Die erste Kammer 3 ist dazu ausgelegt, mit einem Babynahrungskonzentrat befüllt zu werden, währen die zweite Kammer 5 dazu ausgelegt ist, mit einem Fluid befüllt zu werden. Das Fluid kann beispielsweise Wasser (insbesondere steriles Wasser) sein, das wenn mit dem Babynahrungskonzentrat gemischt, eine Babymilch oder einen Babybrei ergibt. Das Befüllen des Beutels 1 erfolgt vorzugsweise vorab (z.B. bereits zu Hause), um einen vorportionierten Beutel 1 für einen späteren Zeitpunkt (z.B. für unterwegs) bereitzustellen.

Um die Kammern 3, 5 für den Transport zu verschließen, können die einzelnen Öffnungen 11, 15 in dem Beutel 1 mittels entsprechender Verschlüsse verschlossen werden. Hierzu kann an der ersten Öffnung 11 das erste Anschlusselement 17 und an der zweiten Öffnung 15 das zweite Anschlusselement 19 bereitgestellt sein. Die Anschlusselemente 17 und/oder 19 können dabei als ringförmige Elemente ausgebildet sein, welche vorzugsweise aus Kunststoff gefertigt sind. Insbesondere ist es hierbei vorteilhaft, wenn die Anschlusselemente 17, 19 im Gegensatz zu dem Beutel 1 selbst starr oder mit einer höheren Steifigkeit ausgebildet sind. Um die Anschlusselemente 17, 19 mit dem Beutel 1 zu verbinden, können die Anschlusselemente 17, 19 mit dem Beutel 1 verschweißt werden. An dem ersten Anschlusselement 17 befindet sich der zumindest bereichsweise umlaufende Spannvorsprung 42 wie oben bezüglich Figur 1 beschrieben.

Wie in Figur 9 gezeigt, können der bzw. die Verschlüsse als Deckel 21 ausgebildet sein, welche jeweils mit den Anschlusselementen 17, 19 verbindbar sind. Die Deckel 21 können dabei mittels eines Einhak- bzw. Klickmechanismuses mit den Anschlusselementen verbunden werden. Alternativ können die Anschlusselemente 17, 19 und/oder die Deckel 21 eine oder mehrere Dichtlippen aufweisen, die wenn in Kontakt mit dem jeweils anderen Element sowohl eine abdichtende als auch eine fixierende Funktion aufweisen. Figur 9 zeigt hingegen einen Schraubmechanismus. An der äußeren Mantelfläche 23 des Anschlusselements 17 bzw. 19 und an einer inneren Mantelfläche 25 des Deckels 21 befinden sich jeweils zumindest bereichsweise ein Gewinde 27, die im Verbindungsprozess ineinander eingreifen bzw. miteinander wechselwirken.

Das Anschlusselement 17 bzw. 19 kann insbesondere auch dazu verwendet werden, mit einem Dispenser verbunden zu werden, welcher beispielsweise dazu ausgelegt ist, ein Babynahrungskonzentrat in die erste Kammer 3 abzugeben. Es ist insbesondere bevorzugt, dass der Beutel 1 mit einem Dispenser wie in der Druckschrift WO 2017/121638 A1 veröffentlicht und/oder in der deutschen Patentanmeldung DE 10 2018 009 551, kompatibel ist, die durch Bezugnahme in Vollständigkeit hierin mit einbezogen sind. Das Anschlusselement 17 bzw. 19 kann hier direkt oder mittels eines Adapters an den Dispenser angeschlossen werden. Die Menge des Babynahrungskonzentrats kann manuell an dem Dispenser eingestellt werden. Alternativ gibt der Dispenser vorbestimmte bzw. vorportionierte Einheiten an den Beutel 1 ab. Der Dispenser kann jedoch auch einen Sensor aufweisen, der einen verbundenen Beutel 1 und ergänzend auch die Größe des Beutels 1 automatisch erkennt. Insbesondere könnte anhand der Größe des angeschlossenen Anschlusselements 17, 19 der Dispenser erkennen, ob es sich um die Pulverkammer oder Wasser-Kammer handelt. Je nachdem welche Kammer der Dispenser erkennt, gibt der Dispenser dann entweder Wasser oder Pulver ab. Die Größe des angeschlossenen Anschlusselements 17, 19 kann dabei auch für den Dispenser Informationen liefern, wieviel Wasser oder Pulver abzugeben ist. Alternativ könnte in oder an dem Anschlusselement 17, 19 hierzu auch ein RFID-Tag vorgesehen bzw. eingearbeitet sein. Sobald der Dispenser einen Beutel 1 erkennt, kann anschließend automatisch eine entsprechende Menge eines Babynahrungskonzentrats abgegeben werden. Dies ist auch in Bezug auf die zweite Kammer 5 und die Zufuhr eines Fluids möglich. Durch die Kompatibilität mit einem Dispenser können die Kammern 3, 5 somit schnell und präzise befüllt werden.

Wird nun zu einem späteren Zeitpunkt (z.B. unterwegs, beispielsweise während einer Reise) Babynahrung benötigt, kann lediglich der Trennbereich 7 zumindest teilweise geöffnet werden. Hierzu genügt es, wenn von außen Kraft auf den Beutel 1 aufgebracht wird. Ist der Trennbereich 7 beispielsweise durch eine Schweißnaht ausgebildet, ist die Kraft dabei so aufzubringen, dass sich die Beutelseiten, welche durch die Schweißnaht miteinander verbunden sind, durch die aufgebrachte Kraft, zumindest teilweise wieder voneinander lösen. Die Beutelseiten werden dabei jedoch selbst nicht beschädigt, so dass ein Austreten der eingefüllten Komponenten vermieden wird. Sobald der Trennbereich 7 geöffnet wurde, können die eingefüllten Komponenten miteinander vermischt werden, so dass anschließend die Babynahrung hergestellt ist. Vorzugsweise kann der Beutel 1 geschüttelt werden.

Die aufzubringende Kraft kann beispielsweise durch ein Drücken auf den Beutel 1 und/oder durch ein Ziehen des Beutels 1 im Wesentlichen entlang der Beutel-Längsrichtung BL erfolgen.

Vor oder nach dem Öffnen des Trennbereichs 7, kann an einer Seite des Beutels 1, der Deckel 21 insbesondere durch einen Babysauger ersetzt werden. Sobald nun der Trennbereich 7 geöffnet ist und die einzelnen Komponenten in dem Beutel 1 vermischt sind, kann das Baby somit direkt aus dem Beutel 1 die Babynahrung konsumieren.

Entgegen der ersten Ausführung des Beutels 1 mit einer Kammer, ist der zumindest eine Magnet 31 hier nicht in einer Spannplatte 46 angeordnet, sondern in dem Verschluss, welcher die zweite Öffnung 15 verschließt. Figur 9 zeigt einen Deckel 21, an oder in dem der zumindest eine Magnet 31 als zweites Spannmittel 44 angeordnet ist.

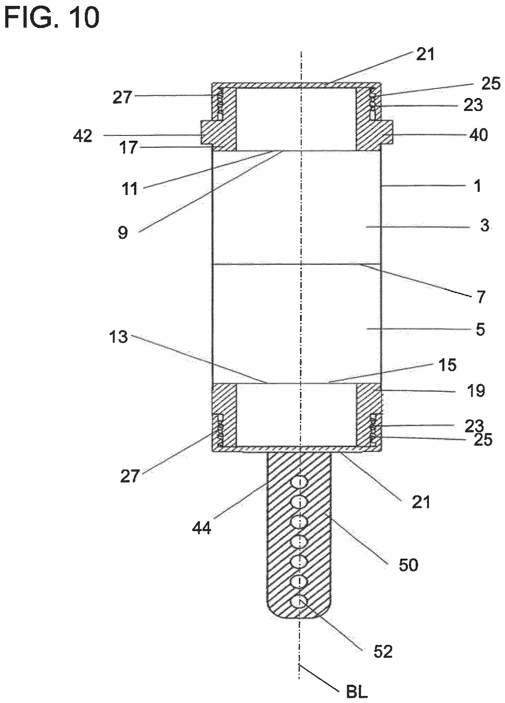

**Figur 10** zeigt einen Beutel 1 mit zwei Kammern gemäß der zweiten Ausführungsform.

Der Beutel 1 ist hier ausgebildet, wie bezüglich Figur 9 beschrieben. Jedoch befindet sich hier kein Magnet als zweites Spannmittel 44 in dem Deckel 21 zum Verschließen der zweiten Öffnung 15. Vielmehr ist hier die Spannlasche 50 an dem Deckel 21 befestigt.

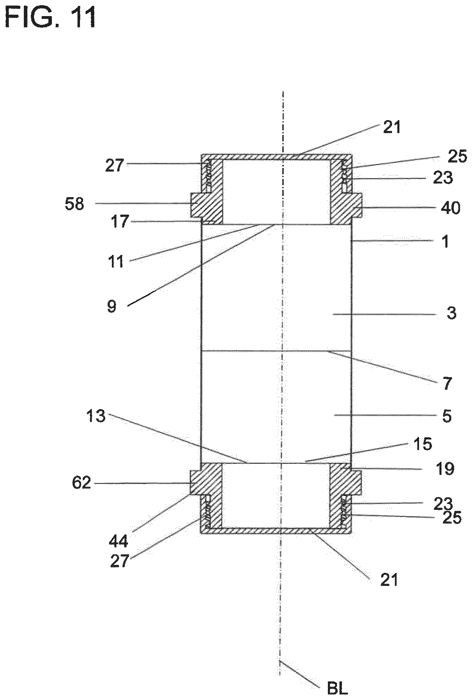

**Figur 11** zeigt einen Beutel 1 mit zwei Kammern gemäß der dritten Ausführungsform.

Der Beutel 1 ist hier ausgebildet, wie bezüglich der Figur 9 beschrieben. Jedoch befindet sich hier kein Magnet als zweites Spannmittel in dem Deckel 21 zum Verschließen der zweiten Öffnung 15. Vielmehr ist hier der zweite Spannvorsprung 62 an dem zweiten Anschlusselement 19 angeordnet bzw. ausgebildet.

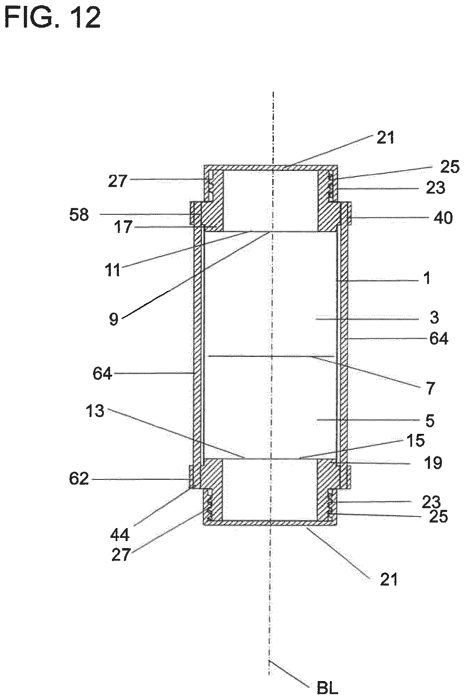

**Figur 12** zeigt einen Beutel 1 mit zwei Kammern gemäß der vierten Ausführungsform. Dieser ist identisch zu dem Beutel 1 gemäß Figur 7 ausgebildet, weist jedoch im Unterschied zu Figur 7 zwei Kammern auf.

Alle Ausführungsformen, welche mit zwei Kammern beschrieben wurden, können auch ohne Trennbereich 7 ausgebildet sein und infolgedessen als Beutel mit lediglich eine Kammer genutzt werden.

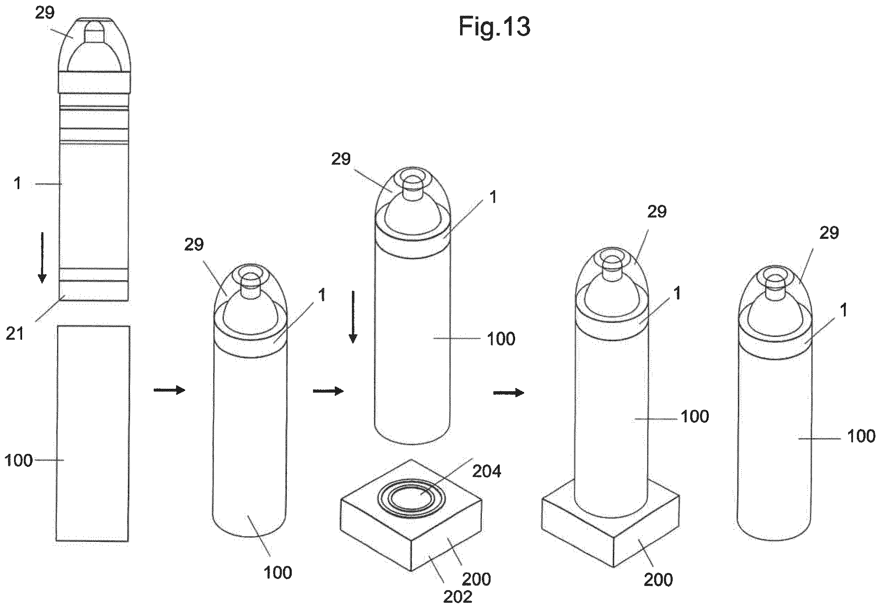

Um das Temperiermodul 100 mit Energie zum Temperieren der Babynahrung zu versorgen, kann das Temperiermodul 100 mit einer Konnektierungseinheit 200 verbunden werden, wie in **Figur 13** gezeigt.

Hierzu können in der Temperiermodul-Bodenfläche 106 Temperiermodul-Anschlusskontakte angeordnet sein, durch welche das Temperiermodul 100 mit der Konnektierungseinheit 200 konnektiert werden kann. Insbesondere kann hierdurch die Heizmatte 122 konnektiert werden.

Das Temperiermodul 100 ist insbesondere so ausgestaltet, dass das Temperiermodul 100 zusätzlich als Haltevorrichtung für den Beutel 1 verwendet werden kann. Nachdem die Babynahrung in dem Beutel 1 temperiert wurde, kann das Baby insbesondere direkt aus dem Beutel 1 trinken, welcher in dem Temperiermodul 100 gehalten wird. Hierdurch kann der Benutzer ein stabiles Element halten, welches einer Flasche ähnelt, während der flexible Beutel 1 im Inneren des Temperiermoduls 100 angeordnet ist.

Im Folgenden wird nun die Konnektierungseinheit 200 beschrieben, welche beispielsweise in Figur 13 (siehe Schritt 3 und 4 des Temperiervorgangs) gezeigt ist.

Die Konnektierungseinheit 200 weist ein Konnektierungeinheits-Gehäuse 202 auf, dessen obere Fläche eine Konnektierungsfläche 204 ist, auf die das Temperiermodul 100, insbesondere die Temperiermodul-Bodenfläche 106, aufsetzbar ist. Vorzugsweise kann das Temperiermodul 100 mit einem Klickmechanismus auf die Konnektierungsfläche 204 geklickt werden. Hierdurch kann das Tempiermodul 100 sicher mit der Konnektierungseinheit 200 verbunden werden. Weiterhin kann der Klickmechanismus bereits dazu genutzt werden, den Temperiervorgang zu starten sobald das Temperiermodul 100 auf die Konnektierungsfläche 204 geklickt ist.

Im Inneren des Konnektierungseinheits-Gehäuses 202 ist vorzugsweise zumindest ein Akku (z.B. ein Lithium-Polymer-Akku) angeordnet. Dieser dient als Energiespeicher, welcher im Bedarfsfall Energie an das Temperiermodul 100 abgibt, um das Heizelement mit Strom zu versorgen. Der Akku ermöglicht es, dass auch unterwegs immer Energie zum Temperieren für Babynahrung vorhanden ist - unabhängig von einer Steckdose. Z.B. mittels eines USB-Anschlusses oder eines herkömmlichen Stromkabels kann der Akku beispielsweise wieder zumindest teilweise geladen werden. Der Akku als auch die Heizmatte 122 ist dabei vorzugsweise derart ausgelegt, dass sowohl flüssige als auch gefrorene Babynahrung in dem Temperiermodul 100 erhitzt werden kann.

Weiterhin kann in dem Inneren des Konnektierungeinheits-Gehäuses 202 eine Steuer- bzw. Regeleinheit angeordnet sein, welche mit dem Akku verschaltet ist, um einen Temperiervorgang zu starten und zu beenden, indem Energie an das Heizelement abgegeben wird oder die Abgabe gestoppt wird. Die Dauer des Temperiervorgangs kann dabei durch eine feste vordefinierte Zeit bestimmt sein oder in Abhängigkeit einer erzielten Temperatur geschehen, welche in dem Temperiermodul-Innenraum 104 erreicht wurde. Hierzu kann in dem Temperiermodul-Innenraum 104 ein Sensor vorgesehen sein, der die Temperatur in dem Temperiermodul-Innenraum 104 (z.B. regelmäßig bzw. zu unterschiedlichen Zeitpunkten) misst und die Messdaten an die Regeleinheit überträgt. In Abhängigkeit der gemessenen Temperaturen regelt die Regeleinheit dann den weiteren Temperiervorgang. Diese Funktion kann auch dazu genutzt werden, Babynahrung in dem Temperiermodul 100 im Wesentlichen auf einer vorbestimmten bzw. vorbestimmbaren Temperatur zu halten. Die gewünschte Temperatur kann beispielsweise an der Konnektierungseinheit 200 eingestellt werden. Zudem können sich an dem Konnektierungseinheit 200 Schalter befinden, die einen Start und/oder Stopp des Temperiervorgangs auslösen. Alternativ oder ergänzend kann die Konnektierungseinheit 200 über eine App steuerbar sein.

Alternativ kann das Temperiermodul 100 auch direkt mittels Kabel und einer Steckdose mit Energie versorgbar sein.

Figur 13 zeigt insbesondere, dass ein Babysauger 29 mit einem Anschlusselement 4, 17, 19 verbunden ist. Dieser ragt während des Temperiervorgangs aus dem Temperiermodul 100 heraus und kann nach dem Temperiervorgang zum Konsumieren der Babynahrung genutzt werden. Der Beutel 1 verbleibt dabei vorzugsweise in dem Temperiermodul 100 als Haltevorrichtung.

In den bisher beschriebenen Ausführungsformen eines Beutels 1 mit zwei Kammern wurde der Trennbereich 7 vorzugsweise mittels einer Schweißnaht hergestellt. Im Folgenden werden weitere Möglichkeiten aufgezeigt.

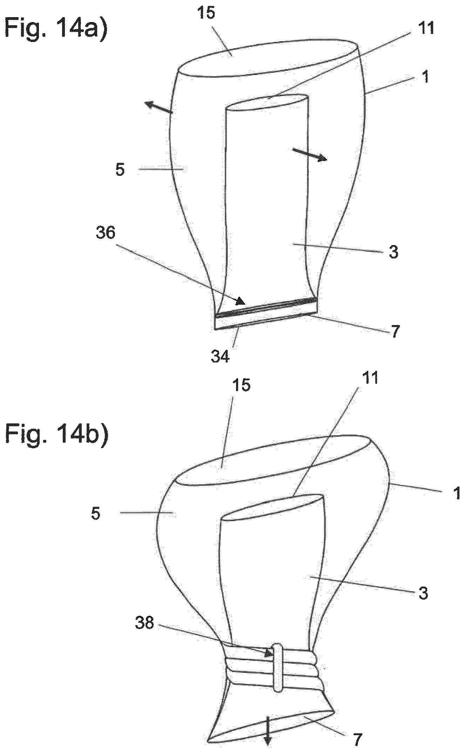

Wie in **Figur 14a****)** gezeigt, kann der Trennbereich 7 auch zumindest eine Faltkante 34 aufweisen. An der Faltkante 34 ist der Beutel 1 in dem Trennbereich 7 um einen bis zu etwa 180° großen Winkel gefaltet, bevorzugt so dass die erste Kammer 3 und die zweite Kammer 5 im Wesentlichen aufeinander liegen. Der gefaltete Zustand ist insbesondere durch ein fixierendes Klebeband 36 fixiert, welches insbesondere in dem Trennbereich 7 angeordnet ist, um den Faltbereich zu fixieren. Sollen die einzelnen Komponenten zu einer Babynahrung vermischt werden, können die erste Kammer 3 und zweite Kammer 5 entfaltet werden, so dass der Trennbereich 7 geöffnet wird.

Weiterhin kann der Trennbereich 7 zwischen der ersten Kammer 3 und der zweiten Kammer 5 eine Klammer aufweisen, die den Beutel 1 in dem Trennbereich 7 abklemmt. Durch ein Öffnen der Klammer wird der Trennbereich 7 geöffnet.

Als noch weitere Alternative kann der Trennbereich 7 durch ein Verdrehen des Beutels 1 in dem Trennbereich 7 ausgebildet werden. Der verdrehte Zustand des Beutels 1 kann durch ein Siegel 38 (z.B. Klebeband) fixiert werden. Zieht der Benutzer an dem Beutel 1 im Wesentlichen entlang der Beutel-Längsrichtung BL, reißt das Siegel 38 auf, und die Verdrehung des Beutels 1 kann sich lösen, so dass sich die in dem Beutel 1 enthaltenen Komponenten vermischen können. Zusätzlich zu der Verdrehung kann der Beutel 1, wie oben beschrieben, gefaltet werden, wie in **Figur 14b****)** gezeigt.

### Bezugszeichenliste

- 1: Beutel
- 2: Kammer
- 3: erste Kammer
- 4: Anschlusselement
- 5: zweite Kammer
- 7: Trennbereich
- 8: Öffnung
- 9: erstes Ende des Beutels
- 11: erste Öffnung
- 13: zweites Ende des Beutels
- 15: zweite Öffnung
- 17: erstes Anschlusselement
- 19: zweites Anschlusselement
- 21: Deckel
- 23: äußere Mantelfläche des Anschlusselements
- 25: innere Mantelfläche des Deckels
- 27: Gewinde
- 29: Babysauger
- 31: Magnet
- 34: Faltkante
- 36: Klebeband
- 38: Siegel
- 40: erstes Spannmittel
- 42: umlaufender Spannvorsprung an dem Anschlusselement
- 44: zweites Spannmittel
- 46: Spannplatte
- 48: Bodenfläche des Beutels
- 50: Spannlasche
- 52: Fixierungsöffnung
- 54: Spanndeckel
- 56: äußere Mantelfläche des Spanndeckels
- 58: erster Spannvorsprung
- 60: Außenseite des Spanndeckels
- 62: zweiter Spannvorsprung
- 64: Spannstrebe

- 100: Temperiermodul
- 102: Temperiermodul-Gehäuse
- 104: Temperiermodul-Innenraum
- 106: Temperiermodul-Bodenfläche
- 108: Temperiermodul-Einsetzöffnung
- 109: umlaufender Rand (erste Spannvorrichtung)
- 111: Spannauflagefläche (erste Spannvorrichtung)
- 112: Innenwand
- 114: Scharnier
- 116: Magnet (zweite Spannvorrichtung)
- 118: Spannöffnung (zweite Spannvorrichtung)
- 120: Unterseite des Temperiermoduls
- 122: Heizmatte
- 124: umlaufende Spannvertiefung (zweite Spannvorrichtung)
- 126: Spannvertiefung (zweite Spannvorrichtung)

- 200: Konnektierungseinheit
- 202: Konnektierungseinheits-Gehäuse
- 204: Konnektierungsfläche

## Patentansprüche

1. Set umfassend ein Temperiermodul (100) zum Temperieren von Babynahrung, insbesondere von Babymilch oder Babybrei, und einen Beutel (1) zur Aufbewahrung der Babynahrung, welcher in das Temperiermodul (100) einsetzbar ist;
wobei das Temperiermodul (100) zumindest ein Heizelement umfasst, welches dazu ausgelegt ist, eine Innenwand (112) des Temperiermoduls (100) zu erwärmen, um die in dem Beutel (1) enthaltene Babynahrung zu temperieren,
wobei der Beutel (1) zumindest eine Kammer (2; 3, 5) zur Aufnahme der Babynahrung umfasst;
wobei die Kammer (2; 3, 5) eine Öffnung (8; 11, 15) zum Befüllen der Kammer (2; 3, 5) aufweist;
wobei an der Öffnung (8; 11, 15) ein Anschlusselement (4; 17, 19) angeordnet ist;
**dadurch gekennzeichnet, dass** das Temperiermodul (100) Spannvorrichtungen umfasst,
wobei an einer Außenseite (23) des Anschlusselements (4; 17, 19) ein erstes Spannmittel (40) ausgebildet ist, wobei das erste Spannmittel (40) einen zumindest bereichsweise umlaufenden Spannvorsprung (42) umfasst;
wobei an einem Ende (13) des Beutels (1), welches dem Ende (9) entgegengesetzt ist, an dem das Anschlusselement (4; 17, 19) angeordnet ist, ein zweites Spannmittel (44) vorgesehen ist,
wobei das erste und zweite Spannmittel (40, 44) des Beutels (1) dazu ausgelegt sind, mit den Spannvorrichtungen des Temperiermoduls (100) verbindbar zu sein, um den in das Temperiermodul (100) eingesetzten Beutel (1) in einem Zustand zu halten, in der ein flächiges Anlegen des Beutels (1) an der Innenwand (112) des Temperiermoduls (100) ermöglicht ist.

2. Set nach Anspruch 1, wobei das Temperiermodul (100) ein rotationssymmetrisches Temperiermodul-Gehäuse (102) mit einer Temperiermodul-Bodenfläche (106) und einer Temperiermodul-Einsetzöffnung (108), über die der Beutel (1) in das Temperiermodul-Gehäuse (102) einsetzbar ist, umfasst, und
wobei vorzugsweise ein umlaufender Rand (109) an der Temperiermodul-Einsetzöffnung (108) oder eine Spannauflagefläche (111) benachbart zu der Temperiermodul-Einsetzöffnung (108) eine erste Spannvorrichtung bildet.

3. Set nach Anspruch 2, wobei in oder an der Temperiermodul-Bodenfläche (106) zumindest ein Magnet (116) als zweite Spannvorrichtung angeordnet ist; oder
wobei in der Innenwand (112) des Temperiermodul-Gehäuses (102) benachbart zu der Temperiermodul-Bodenfläche (106) eine umlaufende Spannvertiefung (124) als zweite Spannvorrichtung ausgebildet ist.

4. Verwendung eines Beutels (1) für eine Aufbewahrung von Babynahrung, insbesondere von Babymilch oder Babybrei, in Zusammenhang mit einem Temperiermodul (100) zum Temperieren der Babynahrung,
wobei das Temperiermodul (100) zumindest ein Heizelement umfasst, welches dazu ausgelegt ist, eine Innenwand (112) des Temperiermoduls (100) zu erwärmen, um die in dem Beutel (1) enthaltene Babynahrung zu temperieren;
wobei der Beutel (1) zumindest eine Kammer (2; 3, 5) zur Aufnahme der Babynahrung umfasst;
wobei die Kammer (2; 3, 5) eine Öffnung (8; 11, 15) zum Befüllen der Kammer (2; 3, 5) aufweist;
wobei an der Öffnung (8; 11, 15) ein Anschlusselement (4; 17, 19) angeordnet ist;
wobei an einer Außenseite (23) des Anschlusselements (4; 17, 19) ein erstes Spannmittel (40) ausgebildet ist, wobei das erste Spannmittel (40) einen zumindest bereichsweise umlaufenden Spannvorsprung (42) umfasst;
wobei an einem Ende (13) des Beutels (1), welches dem Ende (9) entgegengesetzt ist, an dem das Anschlusselement (4; 17, 19) angeordnet ist, ein zweites Spannmittel (44) vorgesehen ist,
wobei das erste und zweite Spannmittel (40, 44) ausgelegt sind, mit Spannvorichtungen des Temperiermoduls (100) verbunden zu sein, wenn der Beutel (1) in das Temperiermodul (100) eingesetzt ist, um den Beutel (1) in einem Zustand zu halten, in der ein flächiges Anlegen des Beutels (1) an eine Innenwand (112) des Temperiermoduls (100) ermöglicht ist.

5. Verwendung nach Anspruch 4, wobei der Beutel (1) eine Kammer (2) aufweist.

6. Verwendung nach Anspruch 5, wobei das zweite Spannmittel (44) eine Spannplatte (46) umfasst, welche an einer Bodenfläche (48) des Beutels (1) befestigt ist und in oder an der zumindest ein Magnet (31) angeordnet ist.

7. Verwendung nach Anspruch 5, wobei der Spannvorsprung an dem Anschlusselement (4) ein erster Spannvorsprung (58) ist und wobei die Öffnung, an der das Anschlusselement (4) ausgebildet ist, eine erste Öffnung (11) ist;
wobei der Beutel (1) eine zweite Öffnung (15) umfasst, welche an einer Seite des Beutels (1) ausgebildet ist, welche der Seite, an der die erste Öffnung (11) ausgebildet ist, entgegengesetzt ist;
wobei an der zweiten Öffnung (15) ein Spanndeckel (54) ausgebildet ist, welcher die zweite Öffnung (15) verschließt und an dessen Außenseite (60) ein zumindest bereichsweise umlaufender zweiter Spannvorsprung (62) ausgebildet ist; und
wobei der erste und zweite Spannvorsprung (58, 62) dazu ausgelegt sind, mit den Spannvorrichtungen des Temperiermoduls (100) in Eingriff zu stehen, wenn der Beutel (1) in das Temperiermodul (100) eingesetzt ist, so dass der Beutel (1) flächig an der Innenwand (112) des Temperiermoduls (100) anliegt.

8. Verwendung nach einem der Ansprüche 5 bis 7, wobei das Anschlusselement (4) dazu ausgelegt ist, mit einer Milchpumpe und/oder einem Dispenser zum Befüllen der Kammer (2) verbunden zu werden.

9. Verwendung nach Anspruch 4, wobei der Beutel (1) eine erste Kammer (3) und eine zweite Kammer (5) umfasst, welche durch einen Trennbereich (7) voneinander getrennt sind;
wobei die erste Kammer (3) zur Aufnahme eines Babynahrungskonzentrats ausgelegt ist;
wobei die zweite Kammer (5) zur Aufnahme eines Fluids ausgelegt ist;
wobei die erste und zweite Kammer (3, 5) entlang einer Beutel-Längsrichtung (BL) des Beutels (1) angeordnet sind;
wobei der Trennbereich (7) durch Krafteinwirkung auf den Beutel (1) zumindest teilweise öffenbar ist, um die in der ersten und zweiten Kammer (3, 5) enthaltenen Komponenten zu einer Babynahrung mischen zu können;
wobei das Anschlusselement mit dem ersten Spannvorsprung (58) ein erstes Anschlusselement (17) ist und wobei die Öffnung, an der das erste Anschlusselement (17) angeordnet ist, eine erste Öffnung (11) ist;
wobei an einem Ende, welches entgegengesetzt zu dem Ende ist, an dem das erste Anschlusselement (17) ausgebildet ist, eine zweite Öffnung (15) ausgebildet ist; und
wobei an der zweiten Öffnung (15) ein zweites Anschlusselement (19) ausgebildet ist.

10. Verwendung nach Anspruch 9, wobei das zweite Spannmittel (44) zumindest einen Magneten (31) umfasst, welcher in oder an einem Verschluss angeordnet ist, welcher mit dem zweiten Anschlusselement (19) verbindbar ist.

11. Verwendung nach Anspruch 9, wobei an der Außenseite (23) des zweiten Anschlusselements (19) ein zumindest bereichsweise umlaufender zweiter Spannvorsprung (62) ausgebildet ist; und
wobei der ersten und zweite Spannvorsprung (58, 62) dazu ausgelegt sind, mit den Spannvorrichtungen des Temperiermoduls in Eingriff zu stehen, wenn der Beutel (1) in das Temperiermodul (100) eingesetzt ist, so dass der Beutel (1) flächig an der Innenwand (112) des Temperiermoduls (100) anliegt.

12. Verwendung nach einem der Ansprüche 9 bis 11, wobei das erste und zweite Anschlusselement (17, 19) dazu ausgelegt sind, mit einem Dispenser verbindbar zu sein, so dass die entsprechende Kammer durch den Dispenser befüllbar ist; und/oder
wobei das Anschlusselement (4, 17, 19) mit einem Baby-Sauger verbindbar ist.

13. Verfahren zum Temperieren einer Babynahrung, insbesondere von Babymilch oder Babybrei, umfassend:
Bereitstellen eines Sets nach einem der Ansprüche 1 bis 3, wobei der Beutel (1) mit Babynahrung befüllt ist;
Einsetzen des Beutels (1) in das Temperiermodul (100), derart dass durch die Spannmittel (40, 44) des Beutels (1) und die Spannvorrichtungen des Temperiermoduls (100) der Beutel (1) flächig an die Innenwand (112) des Temperiermoduls (100) angelegt wird; und
Temperieren der Babynahrung.

14. Verfahren nach Anspruch 13, wobei das Bereitstellen eines Beutels (1) das Bereitstellen eines Beutels (1) mit einer Kammer (2) umfasst, und
wobei der Beutel (1) derart in das Temperiermoduls (100) eingesetzt wird, dass der Spannvorsprung (42) an dem Anschlusselement (4) auf der ersten Spannvorrichtung des Temperiermoduls (100) aufliegt und der zumindest eine Magnet (31) an dem Beutel (1) mit dem zumindest einen Magnet (116) in oder an der Temperiermodul-Bodenfläche (106) in Verbindung tritt.

15. Verfahren nach Anspruch 13, wobei das Bereitstellen eines Beutels (1) das Bereitstellen eines Beutels (1) mit zwei Kammern (3, 5) umfasst,
wobei der Trennbereich (7) durch Aufbringen von Kraft zumindest teilweise geöffnet wird und die in der ersten und zweiten Kammer (3, 5) enthaltenen Komponenten miteinander zu einer Babynahrung vermischt werden bevor der Beutel (1) in das Temperiermodul (100) eingesetzt wird; und
wobei vorzugsweise der Beutel (1) derart in das Temperiermodul (100) eingesetzt wird, dass der Spannvorsprung an dem ersten Anschlusselement (17) auf der ersten Spannvorrichtung des Temperiermoduls (100) aufliegt und der zumindest eine Magnet (31) des Beutels (1) mit dem zumindest einen Magnet (116) in oder an der Temperiermodul-Bodenfläche (106) in Verbindung tritt.

## Claims

1. Set comprising a temperature control module (100) for the temperature control of baby food, in particular baby milk or baby mush, a bag (1) for the storage of baby food that can be placed into the temperature control module (100);
wherein the temperature control module (100) comprises at least one heating element adapted to heat an inner wall (112) of the temperature control module (100) to control the temperature of the baby food contained in the bag (1), and
wherein the bag (1) contains at least one chamber (2, 3, 5) to accommodate the baby food;
wherein the chamber (2, 3, 5) includes an opening (8, 11, 15) to fill the chamber (2, 3, 5);
wherein a connecting element (4,17,19) is arranged at the opening; characterized such that the temperature control module (100) has tensioning devices,
wherein on the outside (23) of the connecting element (4,17,19) there is a first tensioning device (40), wherein the first tensioning device (40) comprises a circumferential tensioning protrusion on the connecting element (42) that passes around at least some of the circumference;
wherein a second tensioning element (44) is fitted to one end (13) of the bag (1) opposite the end (9) on which the connecting element (4, 17, 19) is arranged;
wherein the first and second tensioning devices (40, 44) of the bag (1) are designed to be connectable to the tensioning devices on the temperature control module (100) in order to keep the bag (1) placed in the temperature control module (100) in a position in which the bag (1) can rest flush against the inner wall (112) of the temperature control module (100).

2. Set according to claim 1, wherein the temperature control module (100) comprises a rotationally symmetrical temperature control module housing (102) having a temperature control module bottom area (106) and a temperature control module insertion opening (108) via which the bag (1) can be inserted into the temperature control module housing (102); and
wherein there will preferably be a circumferential edge (109) on the temperature control module insertion opening (108) or tensioning support surface (111) adjacent to the temperature control insertion opening (108) to form an initial tensioning device.

3. Set according to claim 2, wherein at least one magnet (116) is arranged in or on the temperature control bottom area (106) as a second tensioning device; or
wherein a circumferential tensioning recess (100) according to claim 2, wherein at least one tensioning recess (126) forms a second tensioning device adjacent to the temperature control module bottom area (106) on the inner wall (112) of the temperature control module housing (102).

4. Use of a bag (1) for the storage of baby food, in particular baby milk or baby mush, in connection with a temperature control module (100) for the temperature control of baby food,
wherein the temperature control module (100) comprises at least one heating element that is designed to warm one inner wall (112) of the temperature control module (100) in order to control the temperature of the baby food contained in the bag (1);
wherein the bag (1) has at least one chamber (2, 3, 5) to accommodate the baby food;
wherein the chamber (2, 3, 5) has an opening (8, 11, 15) to fill the chamber (2, 3, 5);
wherein there is a connecting element (4, 17, 19) arranged at the opening (8, 11, 15);
wherein on the outside (23) of the connecting element (4, 17, 19) there is a first tensioning device (40), whereby the first tensioning device (40) shows an at least partly circumferential tensioning protrusion on the connecting element;
wherein at one end (13) of the bag (1) opposite the end (9) on which the connecting element is arranged there is a second tensioning device (44);
wherein the first and second tensioning devices (40, 44) are designed to be connectable with tensioning devices on the temperature control module (100) when the bag (1) is inserted into the temperature control module (100) and to keep the bag (1) in a state in which the bag (1) can rest flush against an inner wall (112) of the temperature control module (100).

5. Use according to claim 4, wherein the bag (1) has one chamber (2).

6. Use according to claim 5, wherein the second tensioning device (44) comprises a tensioning plate (46) which is fastened to the bottom area (48) of the bag (1) and in or onto which at least one magnet (31) is arranged;

7. Use according to claim 5, whereby the tensioning protrusion on the connecting element (4) is a first tensioning protrusion and wherein the opening at which the connecting element (4) is arranged is a first opening (11);
wherein the bag (1) has a second opening (15) that is formed on one side of the bag (1) and is opposite to the side on which the first opening (11) is positioned;
wherein a tensioning lid (54) is arranged at the second opening (15), which closes the second opening (15) and an at least partly circumferential tensioning protrusion (62) is formed on its outside (60);
wherein the first and second tensioning protrusions (58, 62) are designed to interlock with the tensioning devices on the temperature control module (100) when the (bag) is inserted into the temperature control module (100) so that the bag (1) rests flush against the inner wall (112) of the temperature control module.

8. Use according to one of claims 5 to 7, wherein the connecting element (4) is designed for connection to a milk pump and/or dispenser to fill the chamber (2).

9. Use according to claim 4, wherein the bag (1) has a first chamber (3) and a second chamber (5) that are kept apart by a separation area (7);
wherein the first chamber (3) is designed to hold concentrated baby food; wherein the second chamber (5) is designed to hold a fluid;
wherein the first and second chambers (3, 5) are arranged in a longitudinal direction (BL) on the bag (1);
wherein the separation area (7) can be at least partly opened by applying force to the bag (12) in order to mix the components of the baby food contained in the first and second chambers (3, 5);
wherein the connecting element with the first tensioning protrusion (58) is a first connecting element (17) and wherein the opening at which the first connecting element (17) is arranged is a first opening (11);
wherein on one end that is opposite to the end on which the first connecting element (17) is formed a second opening (15) is formed; and
wherein at the second opening (15) a second connecting element (19) is formed;

10. Use according to claim 9 wherein the second tensioning device (44) comprises at least one magnet (31), which is arranged in or on a closure that is connectable to the second connecting element (19);

11. Use according to claim 9 wherein on the outside (23) of the second connecting element (44) there is an at least partly circumferential second tensioning protrusion (62), and
wherein the first and second tensioning protrusions (48,62) are designed to interlock with the tensioning devices of the temperature control module (100) when the bag (1) is inserted into the temperature control module (100) so that the bag (1) rests flush against the inside wall (112) of the temperature control module (100).

12. Use according to claims 9 to 11, wherein the first and second connecting elements (17, 19) are designed to be connectable to a dispenser so that the matching chamber can be filled by the dispenser, and/or
wherein the connecting element (4, 17, 19) is connectable to a baby pacifier.

13. Method for the temperature control of baby food, in particular baby milk or baby mush, comprising:
Provision of a set according to one of the claims 1 to 3, wherein the bag (1) is filled with baby food;
Insertion of the bag (1) into the temperature control module (100) in such a way that the bag (1) is placed flush against the inner wall (112) of the temperature control module and held there by the tensioning devices (40, 44) on the bag (1) and the tensioning devices on the temperature control module (100), and
Temperature control of the baby food.

14. Method according to claim 13, wherein the provision of a bag (1) comprises the provision of a bag (1) with one chamber (2), and
wherein the bag (1) is placed into the temperature control module (100) in such a way that the tensioning protrusion (42) rests on the connecting element (44) on the first tensioning device of the temperature control module (100) and at least one magnet (31) on the bag (1) connects with at least one magnet (116) in or on the bottom area (106) of the temperature control module (100).

15. Method according to claim 13, wherein the provision of a bag (1) comprises the provision of a bag (1) with two chambers (3, 5),
wherein the separation area (7) can be at least partly opened by the application of force and the components contained in the first and second chambers (3, 5) are mixed to form baby food before the bag (1) is placed into the temperature control module (100); and
wherein the bag (1) is preferably placed into the temperature control module (100) in such a way that the tensioning protrusion on the first connecting element (17) rests on the first tensioning device of the temperature control module (100) and at least one magnet (31) on the bag (1) connects with at least one magnet (116) in or on the bottom area (106) of the temperature control module (100).

## Revendications

1. Ensemble comprenant un module d'équilibrage de température (100) pour équilibrage de la température de nourriture pour bébés, notamment de lait infantile ou de bouillies pour bébé, et d'un sachet (1) pour conservation de nourriture pour bébés qui est insérable dans le module d'équilibrage de température (100) ;
le module d'équilibrage de température (100) comprenant au moins un élément chauffant qui est conçu pour réchauffer une paroi intérieure (112) du module d'équilibrage de température (100) afin d'équilibrer la température de la nourriture pour bébés contenue dans le sachet (1),
le sachet (1) comprenant au moins une chambre (2 ; 3, 5) destinée à recevoir la nourriture pour bébés ;
la chambre (2 ; 3, 5) présentant une ouverture (8 ; 11, 15) pour le remplissage de la chambre (2 ; 3, 5) ;
un élément de raccord (4 ; 17, 19) étant disposé sur l'ouverture (8 ; 11, 15) ;
**caractérisé par le fait que** le module d'équilibrage de température (100) comprend des dispositifs de serrage,
un premier moyen de serrage (40) étant formé sur un côté extérieur (23) de l'élément de raccord (4 ; 17, 19), le premier élément de serrage (40) comprenant un tenon de serrage circulaire du moins par section (42) ;
un deuxième moyen de serrage (44) étant prévu à l'extrémité (13) du sachet (1) qui est opposée à l'extrémité (9) sur laquelle est disposé l'élément de raccord (4 ; 17, 19),
le premier et le deuxième moyens de serrage (40, 44) du sachet (1) étant conçus pour pouvoir être raccordés aux dispositifs de serrage du module d'équilibrage de température (100) afin de maintenir le sachet (1) inséré dans le module d'équilibrage de température (100) dans un état permettant d'appliquer à plat le sachet (1) contre la paroi intérieure (112) du module d'équilibrage de température (100).

2. Ensemble conforme à la revendication numéro 1, le module d'équilibrage de température (100) comprenant un boîtier à symétrie de révolution (102) avec un fond de module d'équilibrage de température (106) et une ouverture d'insertion du module d'équilibrage de température (108) par laquelle le sachet (1) est insérable dans le boîtier du module d'équilibrage de température (102), et
un bord circulaire (109) situé sur l'ouverture d'insertion du module d'équilibrage de température (108), de préférence, ou bien une portée de serrage (111) voisine de l'ouverture d'insertion du module d'équilibrage de température (108) formant un premier dispositif de serrage.

3. Ensemble conforme à la revendication numéro 2, où au moins un aimant (116) est disposé dans le fond du module d'équilibrage de température (106), ou au fond de celui-ci, en tant que deuxième dispositif de serrage ; ou
où une encoche de serrage circulaire (124) située dans la paroi intérieure (112) du boîtier du module d'équilibrage de température (102) à côté du fond du module d'équilibrage de température (106) forme un deuxième dispositif de serrage.

4. Utilisation d'un sachet (1) pour la conservation de nourriture pour bébés, notamment de lait infantile ou de bouillies pour bébés, en lien avec un module d'équilibrage de la température (100) dans le but d'équilibrer la température de la nourriture pour bébés,
le module d'équilibrage de température (100) comprenant au moins un élément chauffant qui est conçu pour chauffer une paroi intérieure (112) du module d'équilibrage de température (100) afin d'équilibrer la température de la nourriture pour bébés contenue dans le sachet (1) ;
le sachet (1) comprenant au moins une chambre (2 ; 3, 5) destinée à recevoir la nourriture pour bébés ;
la chambre (2 ; 3, 5) présentant une ouverture (8 ; 11, 15) pour le remplissage de la chambre (2 ; 3, 5) ;
un élément de raccord (4 ; 17, 19) étant disposé sur l'ouverture (8 ; 11, 15) ;
un premier moyen de serrage (40) étant formé sur un côté extérieur (23) de l'élément de raccord (4 ; 17, 19), le premier moyen de serrage (40) comprenant un tenon de serrage circulaire du moins par section (42) ;
un deuxième moyen de serrage (44) étant prévu à l'extrémité (13) du sachet (1) qui est opposée à l'extrémité (9) sur laquelle est disposé l'élément de raccord (4 ; 17, 19),
le premier et le deuxième moyens de serrage (40, 44) étant conçus pour être joints aux dispositifs de serrage du module d'équilibrage de température (100), lorsque le sachet (1) est mis en place dans le module d'équilibrage de température (100), afin de maintenir le sachet (1) dans un état permettant de l'appliquer à plat contre une paroi intérieure (112) du module d'équilibrage de température (100).

5. Utilisation conforme à la revendication numéro 4, le sachet (1) présentant une chambre (2).

6. Utilisation conforme à la revendication numéro 5, le deuxième moyen de serrage (44) comprenant une plaque de serrage (46) qui est fixée sur un fond (48) du sachet (1) et dans laquelle ou contre laquelle est disposé au moins un aimant (31).

7. Utilisation conforme à la revendication numéro 5, le tenon de serrage sur l'élément de raccord (4) constituant un premier tenon de serrage (58) et l'ouverture sur laquelle est formé l'élément de raccord (4) constituant une première ouverture (11) ;
le sachet (1) comprenant une deuxième ouverture (15) qui est formée sur le côté du sachet (1) lequel est opposé au côté contre lequel la première ouverture (11) est formée ;
un couvercle de serrage (54) étant formé sur la deuxième ouverture (15), couvercle qui obture la deuxième ouverture (15) et sur le côté extérieur (60) duquel est formé un deuxième tenon de serrage circulaire du moins par section (62) ; et
le premier et le deuxième tenons de serrage (58, 62) étant conçus pour être en prise avec les dispositifs de serrage du module d'équilibrage de température (100), lorsque le sachet (1) est mis en place dans le module d'équilibrage de température (100), de sorte que le sachet (1) est appliqué à plat contre la surface de la paroi intérieure (112) du module d'équilibrage de température (100).

8. Utilisation conforme à l'une des revendications numéros 5 à 7, l'élément de raccord (4) étant conçu pour être raccordé à un tire-lait et/ou à un distributeur (11) aux fins de remplissage de la chambre (2).

9. Utilisation conforme à la revendication numéro 4, le sachet (1) comprenant une première chambre (3) et une deuxième chambre (5) qui sont séparées l'une de l'autre par une zone de séparation (7) ;
la première chambre (3) étant conçue pour recevoir un aliment pour bébés concentré ;
la deuxième chambre (5) étant conçue pour recevoir un fluide ;
la première et la deuxième chambres (3, 5) étant disposées le long du sens longitudinal (SL) du sachet (1) ;
la zone de séparation (7) étant ouvrable, du moins partiellement, par exercice d'une force sur le sachet (1) afin de pouvoir mélanger les composants contenus dans les première et deuxième chambres (3, 5) pour obtenir un aliment pour bébés.
l'élément de raccord doté du premier tenon de serrage (58) constituant un premier élément de raccord (17) et l'ouverture sur laquelle est disposé le premier élément de raccord (17) constituant une première ouverture (11) ;
une deuxième ouverture (15) étant formée à l'extrémité qui est opposée à l'extrémité sur laquelle est formé le premier élément de raccord (17) ; et
un deuxième élément de raccord (19) étant formé sur la deuxième ouverture (15).

10. Utilisation conforme à la revendication numéro 9, le deuxième moyen de serrage (44) comprenant au moins un aimant (31) qui est disposé dans ou contre un obturateur assemblable au deuxième dispositif de serrage (19).

11. Utilisation conforme à la revendication numéro 9, un deuxième tenon de serrage circulaire du moins par section (62) étant formé sur le côté extérieur (23) du deuxième élément de raccord (19) ; et
le premier et le deuxième tenons de serrage (58, 62) étant conçus pour être en prise avec les dispositifs de serrage du module d'équilibrage de température, lorsque le sachet (1) est mis en place dans le module d'équilibrage de température (100), de sorte que le sachet (1) soit appliqué à plat sur la surface de la paroi intérieure (112) du module d'équilibrage de température (100).

12. Utilisation conforme à l'une des revendications numéros 9 à 11, le premier et deuxième éléments de raccord (17, 19) étant conçus pour être raccordables à un distributeur, de sorte que la chambre correspondante soit remplissable par le distributeur ; et/ou
l'élément de raccord (4, 17, 19) étant raccordable à une tétine.

13. Procédé pour équilibrage de la température d'un aliment pour bébés, notamment de lait infantile ou bouillies pour bébé, comprenant :
la fourniture d'un ensemble conforme aux revendications numéros 1 à 3, le sachet (1) étant rempli de nourriture pour bébés ;
l'insertion du sachet (1) dans le module d'équilibrage de température (100) de sorte que le sachet (1) soit appliqué à plat sur la surface de la paroi intérieure (112) du module d'équilibrage de température (100) par les moyens de serrage (40, 44) du sachet (1) et les dispositifs de serrage du module d'équilibrage de température (100) ; et
l'équilibrage de la température de l'aliment pour bébés.

14. Procédé conforme à la revendication numéro 13, la fourniture d'un sachet (1) comprenant la fourniture d'un sachet (1) avec une chambre (2), et
le sachet (1) étant inséré dans le module d'équilibrage de température de telle sorte que le tenon de serrage (42) porte sur l'élément de raccord (4) situé sur le premier dispositif de serrage du module d'équilibrage de température (100) et au moins un aimant (31) situé sur le sachet (1) entrant en contact avec au moins un aimant (116) situé dans le fond du module d'équilibrage de température (106) ou au fond de ce dernier.

15. Procédé conforme à la revendication numéro 13, selon lequel la fourniture d'un sachet (1) comprend la fourniture d'un sachet (1) à deux chambres (3, 5),
la zone de séparation (7) s'ouvrant, du moins partiellement, sous l'effet de l'application d'une force et les composants contenus dans la première et deuxième chambres (3, 5) étant mélangés l'un à l'autre pour former un aliment pour bébés avant que le sachet (1) ne soit mis en place dans le module d'équilibrage de température (100) ; et
où, de préférence, le sachet (1) est mis en place dans le module d'équilibrage de température (100) de telle sorte que le tenon de serrage situé sur le premier élément de raccord (17) prenne appui sur le premier dispositif de serrage du module d'équilibrage de température (100) et où au moins un aimant (31) du sachet (1) entre en contact avec au moins un aimant (116) situé dans le fond du module d'équilibrage de température (106), ou au fond de ce dernier.
